# EUROPEAN PATENT APPLICATION

(11) **EP 3 846 393 A1**
(43) Date of publication of application: **07.07.2021**
(21) Application number: 20216874.6
(22) Date of filing: 23.12.2020
(51) Int. Cl.: H04L 12/58

(54) **IDENTIFIER FOR MESSAGE THREAD**

(30) Priority: 02.01.2020 US 202016733017
(71) Applicant: WhatsApp LLC, Menlo Park, CA 94025 (US)
(72) Inventor: VARMA, Ajit, Menlo Park, CA California 94025 (US); TIAN, Cheng, Menlo Park, CA California 94025 (US)
(74) Representative: Murgitroyd & Company

(57) **Abstract**

Techniques are described that provide context identifiers for conversation threads between two parties communicating via a communication (e.g., messaging) platform. In at least one example, the parties may include a customer and a merchant customer service representative. In some examples, the merchant customer service representative may send a context message to the communication platform indicating a summary of the conversation thread and messages associated therewith. The communication platform may cause the summary to be presented concurrently with at least one message of the messages associated with the conversation thread. The summary may provide a means by which the customer may determine a context associated with a conversation thread, such as to quickly identify a particular conversation thread among a plurality of conversation threads between the customer and the merchant.

## Description

### BACKGROUND

Customers often communicate with merchants about one or more topics. For example, customers may have questions about items available for purchase from a merchant, may contact a merchant to place an order, or may encounter issues with existing orders from various merchants, such as delivery delays, items missing from an order, improperly functioning items, and the like. Typically, merchants provide customer service as a means by which customers may address the issues. In some cases, a customer may communicate with a customer service representative via a real-time messaging system to address an issue. However, maintaining a messaging system may be overly burdensome to many merchants. As such, merchants may utilize an existing messaging service to provide customer service to customers.

### SUMMARY OF THE INVENTION

According to a first aspect of the present invention there is provided a method comprising: processing messages associated with a conversation thread between a user and a service provider, wherein the messages are transmitted between a first instance of an application on a first device associated with the user and a second instance of the application on a second device associated with the service provider; receiving, from the second device via the second instance of the application and at a first time, a summary of the conversation thread and an indication of a first message and a second message of the messages associated with the conversation thread; and causing the summary to be presented at the first device via the first instance of the application based at least in part on an indication that at least one of the first message or the second message is presented on a display of the first device via the first instance of the application.

In some embodiments processing the messages may comprise associating a first message identifier with the first message and a second message identifier with the second message; and providing the first message identifier and the second message identifier at the second device via the second instance of the application, wherein the indication of the first message and the second message comprises the first message identifier and the second message identifier.

In some embodiments the method may further comprise receiving, from the second device via the second instance of the application at a second time, an update to the summary and a second indication of the first message and a third message of the conversation thread, wherein the third message comprises a last message of the conversation thread; and causing the update to the summary to be presented at the first device via the first instance of the application based at least in part on an indication that at least one of the first message or the third message are presented on the display of the first device via the first instance of the application.

In some embodiments the messages may be presented sequentially from a top toward a bottom of a user interface of the first instance of the application, and the summary may be presented in a position proximate the top of the user interface before the messages associated with the conversation thread.

In some embodiments the method may further comprise receiving, from the first device via the first instance of the application, an indication of selection of a selectable control to collapse the conversation thread; and causing the conversation thread to be hidden from view, wherein the conversation thread is represented on the display of the first device by the summary presented on the display.

In some embodiments the method may further comprise receiving, from the first device via the first instance of the application, a first indication of selection of a selectable control to continue the conversation thread at a second time and a third message associated with the conversation thread; and causing the third message to be presented at the second device via the second instance of the application proximate the conversation thread.

In some embodiments the method may further comprise processing additional messages associated with the conversation thread between the first instance of the application and the second instance of the application; receiving, from the second device via the second instance of the application, an update to the summary and an indication of the first message and a fourth message of the conversation thread, wherein the fourth message comprises an updated last message of the conversation thread; and causing the update to the summary to be presented at the first device via the first instance of the application based at least in part on an indication that at least one of the first message or the fourth message are presented on the display of the first device via the first instance of the application.

In some embodiments the summary may comprise a context of the conversation thread, the context may comprise at least one of: an order identifier; a delivery update; a refund identifier; a topic associated with the conversation thread; a return identifier; or a resolution associated with the conversation thread.

According to a second aspect of the present invention there is provided a computing system comprising: one or more processors; and computer readable media storing instructions that, when executed by the one or more processors, cause the computing system to: process messages associated with a conversation thread between a user and a service provider, wherein the messages are transmitted between a first instance of an application on a first device associated with the user and a second instance of the application on a second device associated with the service provider; receive, from the second device via the second instance of the application, a summary of the conversation thread; and cause the summary to be presented at the first device via the first instance of the application based at least in part on an indication that at least one message of the messages is presented on a display of the first device via the first instance of the application.

In some embodiments the instructions may further cause the system to receive, from the second device via the second instance of the application, an indication of a first message of the conversation thread and a second message of the conversation thread, wherein the second message is associated with a last message of the conversation thread, and wherein the summary is presented via the first instance of the application concurrently with the messages associated with the conversation thread between the first message and the second message.

In some embodiments the summary may comprise a context of the conversation thread, the context comprising at least one of: an order identifier; a delivery update; a refund identifier; a topic associated with the conversation thread; a return identifier; or a resolution associated with the conversation thread.

In some embodiments the summary may be received at a first time, the instructions may further cause the system to: receive, from the second device via the second instance of the application at a second time, an update to the summary and an indication of a first message and a second message associated with the conversation thread, the second message comprising a last message associated with the conversation thread; and cause the update to the summary to be presented at the first device via the first instance of the application based at least in part on an indication that at least one of the first message or the second message are presented on the display of the first device via the first instance of the application.

In some embodiments the conversation thread may be associated with a first time, the instructions may further cause the system to: receive, from the first device via the first instance of the application, a first indication of selection of a selectable control to continue the conversation thread at a second time and an additional message associated with the conversation thread; and cause the additional message to be presented at the second device via the second instance of the application proximate a message associated with conversation thread.

In some embodiments the instructions may further cause the system to: process additional messages associated with the conversation thread between the first instance of the application and the second instance of the application; receive, from the second device via the second instance of the application, an update to the summary and an indication of a first message and a second message associated with the conversation thread, the second message comprising a last message of the conversation thread comprising the messages and the additional messages; and cause the update to the summary to be presented at the first device via the first instance of the application based at least in part on an indication that at least one of the first message or the second message are presented on the display of the first device via the first instance of the application.

According to a third aspect of the present invention there is provided one or more computer readable media storing instructions that, when executed by one or more processors of a computing device, cause the computing device to: process messages associated with a conversation thread between a user and a service provider, wherein the messages are transmitted between a first instance of an application on a first device associated with the user and a second instance of the application on a second device associated with the service provider; receive, from the second device via the second instance of the application, a summary of the conversation thread; and cause the summary to be presented at the first device via the first instance of the application based at least in part on an indication that at least one message of the messages is presented on a display of the first device via the first instance of the application.

In some embodiments the instructions may further cause the computing device to receive, from the second device via the second instance of the application, an indication of association of the summary with a first message of the conversation thread and a second message of the conversation thread, wherein the second message is associated with a last message of the conversation thread, and wherein the summary is presented via the first instance of the application concurrently with the messages of the conversation thread between the first message and the second message.

In some embodiments the instructions may further cause the computing device to: associate a first message identifier with the first message and a second message identifier with the second message; and send the first message identifier and the second message identifier to the second device via the second instance of the application, wherein the indication of association of the summary with the first message and the second message comprises the first message identifier and the second message identifier.

In some embodiments the summary may be associated with a first time, the instructions may further cause the computing device to: receive, from the second device via the second instance of the application at a second time, an update to the summary and a second indication of the first message and a third message of the conversation thread, wherein the third message comprises an updated last message of the conversation thread; and cause the update to the summary to be presented at the first device via the first instance of the application based at least in part on an indication that at least one of the first message or the third message are presented on the display of the first device via the first instance of the application.

In some embodiments the conversation thread may be associated with a first time, the instructions may further cause the computing device to: receive, from the first device via the first instance of the application, a first indication of selection of a selectable control to continue the conversation thread at a second time and an additional message associated with the conversation thread; and cause the additional message to be presented at the second device via the second instance of the application proximate a message associated with conversation thread.

In some embodiments the instructions may further cause the computing device to: process additional messages associated with the conversation thread between the first instance of the application and the second instance of the application; receive, from the second device via the second instance of the application, an update to the summary and an indication of a first message and a second message associated with the conversation thread, the second message comprising a last message of the conversation thread comprising the messages and the additional messages; and cause the update to the summary to be presented at the first device via the first instance of the application based at least in part on an indication that at least one of the first message or the second message are presented on the display of the first device via the first instance of the application.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 is a schematic view of an example system usable to implement example message identifier techniques described herein.
FIGS. 2A - 2C illustrate an example interface in which a context identifier may be displayed in association with a conversation thread.
FIGS. 3A - 3D illustrate an example interface in which a first context identifier may be displayed in association with a conversation thread at a first time and a second context identifier may be displayed in association with the conversation thread at a second time.
FIGS. 4A and 4B illustrate an example interface usable to enable a user to continue a previously completed conversation with a merchant representative.
FIG. 5 illustrates a block diagram illustrating an example system of computing devices usable to implement example techniques described herein.
FIG. 6 illustrates an example process for providing a message header for a conversation thread, utilizing the techniques described herein.
FIG. 7 illustrates an example process for updating a message header associated with a conversation thread, utilizing the techniques described herein.
FIG. 8 illustrates an example process for associating a message generated by a user with a previous conversation thread.

### DETAILED DESCRIPTION

As discussed above, many merchants offer customer service via real-time messaging. Oftentimes, the merchants may utilize a real-time messaging service (e.g., communication platform) as a means by which customers may communicate with customer service representatives. For instance, a customer may launch an application associated with the communication platform and may send a message to a merchant customer service representative (e.g., merchant) via the application, to request customer service support, such as to address a customer issue, inquire about a particular product, place an order, or the like. The customer and the merchant may communicate back and forth in a conversation thread regarding the customer request. The conversation thread may be stored in the application and/or by the communication platform so the customer may access the information associated therewith, such as to review the resolution, the order number, or the like. Over time, the customer may initiate many threads with the merchant, making it increasingly more difficult for the customer to find a particular conversation thread in the application. For instance, the customer may scroll through and read dozens of pages of messages to locate a particular conversation thread of interest.

This application describes techniques for providing context identifiers or other context indicators (e.g., context header, summary, etc.) for conversation threads (e.g., message threads, threads, etc.) on a messaging application provided by a communication platform, to enable a user (e.g., customer) to quickly identify a particular thread of interest to the user. The communication platform may be hosted by a merchant or other third-party service provider and/or may be separate from the merchant and/or third-party service provider involved in a conversation thread with the user.

A context identifier may be associated with a conversation thread and presented on a user device without input or effort from the user. For instance, a communication platform may process messages between a customer and a merchant customer service representative in a conversation thread. The communication platform may assign message identifiers to each message associated with the conversation thread. The merchant customer service representative may send a summary of a conversation to the communication platform along with identifiers associated with a first message of the thread and a last message of the thread. Responsive to receiving the summary, the communication platform may automatically associate the summary with the thread. The communication platform may cause the summary to be presented on the user device as a context identifier concurrently with the messages of the thread. In various examples, the context identifier may be presented in a position proximate the conversation thread based on a determination that at least one message of the thread is being presented to the customer. In other words, as the user scrolls through messages of the conversation thread, the context identifier may be anchored (e.g., stick, remain) in place on the display while at least a portion of the conversation thread is visible on the user interface.

In some examples, the communication platform may process messages associated with a conversation thread between a user and a service provider, wherein the messages are transmitted between a first instance of an application on a first device associated with a user and a second instance of the application on a second device associated with the service provider. The communication platform may receive, from the second device via the second instance of the application and at a first time, a summary of the conversation thread and an indication of a first message and a second message of the messages associated with the conversation thread. The communication platform may cause the summary to be presented at the first device via the first instance of the application based at least in part on an indication that at least one of the first message or the second message is presented on a display of the user device via the first instance of the application.

In some examples, the communication platform may associate a first message identifier with the first message and a second message identifier with the second message. The communication platform may provide the first message identifier and the second message identifier at the second device via the second instance of the application, wherein the indication of the first message and the second message comprises the first message identifier and the second message identifier.

In some examples, the communication platform may receive, from the second device via the second instance of the application at a second time, an update to the summary and a second indication of the first message and a third message of the conversation thread, wherein the third message comprises a last message of the conversation thread. In some examples, the communication platform may cause the update to the summary to be presented at the first device via the first instance of the application based at least in part on an indication that at least one of the first message or the third message are presented on the display of the user device via the first instance of the application.

In some examples, wherein the messages are presented sequentially from a top toward a bottom of a user interface of the first instance of the application, and the summary is presented in a position proximate the top of the user interface before the messages associated with the conversation thread.

In some examples, the communication platform may receive, from the first device via the first instance of the application, an indication of selection of a selectable control to collapse the conversation thread. In some examples, the communication platform may cause the conversation thread to be hidden from view, wherein the conversation thread is represented on the display of the first device by the summary presented on the display.

In some examples, the communication platform may receive, from the first device via the first instance of the application, a first indication of selection of a selectable control to continue the conversation thread at a second time and a third message associated with the conversation thread. In some examples, the communication platform may then cause the third message to be presented at the second device via the second instance of the application proximate the conversation thread.

In some examples, the communication platform may process additional messages associated with the conversation thread between the first instance of the application and the second instance of the application. In some examples, the communication platform may receive, from the second device via the second instance of the application, an update to the summary and an indication of the first message and a fourth message of the conversation thread, wherein the fourth message comprises an updated last message of the conversation thread. In some examples, the communication platform may cause the update to the summary to be presented at the first device via the first instance of the application based at least in part on an indication that at least one of the first message or the fourth message is presented on the display of the user device via the first instance of the application.

In some examples, the summary may include a context of the conversation thread, the context comprising at least one of: an order identifier, a delivery update, a refund identifier, a topic associated with the conversation thread, a return identifier, or a resolution associated with the conversation thread.

In some examples, the communication platform may process messages associated with a conversation thread between a user and a service provider, wherein the messages are transmitted between a first instance of an application on a first device associated with the user and a second instance of the application on a second device associated with the service provider. In some examples, the communication platform may receive, from the second device and via the second instance of the application, a summary of the conversation thread. In some examples, the communication platform may cause the summary to be presented at the first device via the first instance of the application based at least in part on an indication that at least one message of the messages is presented on a display of the user device via the first instance of the application.

In some examples, the communication platform may receive, from the second device and via the second instance of the application, an indication of a first message of the conversation thread and a second message of the conversation thread, wherein the second message is associated with a last message of the conversation thread, and wherein the summary is presented via the first instance of the application concurrently with the messages associated with the conversation thread between the first message and the second message.

In various examples, the communication platform may receive the summary at a first time and at a second time receive, from the second device via the second instance of the application, an update to the summary and an indication of a first message and a second message associated with the conversation thread, the second message comprising a last message associated with the conversation thread. The communication platform may cause the update to the summary to be presented at the first device via the first instance of the application based at least in part on an indication that at least one of the first message or the second message are presented on the display of the user device via the first instance of the application.

In some examples, the communication platform may determine that the conversation thread is associated with a first time and at a second time, may receive, from the first device via the first instance of the application, a first indication of selection of a selectable control to continue the conversation thread at a second time and an additional message associated with the conversation thread. In some examples, the communication platform may cause the additional message to be presented at the second device via the second instance of the application proximate a message associated with conversation thread.

In various examples, the communication platform may process additional messages associated with the conversation thread between the first instance of the application and the second instance of the application. In some examples, the communication platform may receive, from the second device and via the second instance of the application, an update to the summary and an indication of a first message and a second message associated with the conversation thread, the second message comprising a last message of the conversation thread comprising the messages and the additional messages. In some examples, the communication platform may cause the update to the summary to be presented at the first device via the first instance of the application based at least in part on an indication that at least one of the first message or the second message are presented on the display of the user device via the first instance of the application.

In some examples, the communication platform may process messages associated with a conversation thread between a user and a service provider, wherein the messages are transmitted between a first instance of an application on a first device associated with the user and a second instance of the application on a second device associated with the service provider. The communication platform may receive, from the second device via the second instance of the application, a summary of the conversation thread. In some examples, the communication platform may cause the summary to be presented at the first device via the first instance of the application based at least in part on an indication that at least one message of the messages is presented on a display of the user device via the first instance of the application.

In various examples, the communication platform may cause the computing device to receive, from the second device via the second instance of the application, an indication of association of the summary with a first message of the conversation thread and a second message of the conversation thread, wherein the second message is associated with a last message of the conversation thread, and wherein the summary is presented via the first instance of the application concurrently with the messages of the conversation thread between the first message and the second message.

In some examples, the communication platform may associate a first message identifier with the first message and a second message identifier with the second message. In various examples, the communication platform may provide the first message identifier and the second message identifier at the second device via the second instance of the application, wherein the indication of association of the summary with the first message and the second message comprises the first message identifier and the second message identifier.

In various examples, the communication platform may receive, from the second device via the second instance of the application at a second time, an update to the summary and a second indication of the first message and a third message of the conversation thread, wherein the third message comprises an updated last message of the conversation thread. In some examples, the communication platform may cause the update to the summary to be presented at the first device via the first instance of the application based at least in part on an indication that at least one of the first message or the third message are presented on the display of the user device via the first instance of the application.

In some examples, the communication platform may receive, from the first device via the first instance of the application, a first indication of selection of a selectable control to continue the conversation thread at a second time and an additional message associated with the conversation thread. In some examples, the communication platform may cause the additional messages to be presented at the second device via the second instance of the application proximate a message associated with the conversation thread.

In some examples, the communication platform may process additional messages associated with the conversation thread between the first instance of the application and the second instance of the application. In various examples, the communication platform may receive, from the second device via the second instance of the application, an update to the summary and an indication of a first message and a second message associated with the conversation thread, the second message comprising a last message of the conversation thread comprising the messages and the additional messages. In some examples, the communication platform may cause the update to the summary to be presented at the first device via the first instance of the application based at least in part on an indication that at least one of the first message or the second message are presented on the display of the user device via the first instance of the application.

The techniques described herein improve a user interface of a computing device by associating context identifiers (e.g., summaries of conversation threads) with conversation threads in a messaging application. A context identifier may provide a means by which a user may quickly access the context of a conversation thread without having to read the content of each message associated therewith. For instance, the context identifier may improve efficiency of using an electronic device by allowing the user to more quickly determine the context associated with the conversation thread.

Additionally, the techniques described herein improve performance of one or more computing devices by reducing an amount of content sent over a network. For instance, a user may contact a merchant about a particular issue and may reach a resolution. At a later date, the user may need to address the particular issue again, such as if the resolution was not sufficient or not fulfilled. The user may quickly find and re-open the conversation thread. By re-opening the thread (in lieu of starting a new thread), the user may be able to re-establish communication regarding the issue with fewer messages, such as without an introduction or message with background information. Because the user may re-establish communication with fewer messages, the techniques described herein may reduce the amount of content (e.g., messages) sent over the network. As such, the quantity of data sent over the network may be reduced.

These and other aspects are described further below with reference to the accompanying drawings. The drawings are merely example implementations and should not be construed to limit the scope of the claims. For example, while examples are illustrated in the context of a user interface for a mobile device, the techniques may be implemented using any computing device and the user interface may be adapted to the size, shape, and configuration of the particular computing device. Also, while many of the examples are given in the context of providing customer service, the techniques described herein may also be applied to any other type of messaging with a third-party service provider or other party via a messaging application.

In particular examples, one or more objects (e.g., content or other types of objects) of a computing system may be associated with one or more privacy settings. The one or more objects may be stored on or otherwise associated with any suitable computing system or application, such as, for example, a messaging application, a social-networking system, a client system, a third-party system, a social-networking application, a photo-sharing application, or any other suitable computing system or application. Although the examples discussed herein are in the context of an online messaging application, these privacy settings may be applied to any other suitable computing system. Privacy settings (or "access settings") for an object or item of content may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the messaging application network. When privacy settings for an object allow a particular user or other entity to access that object, the object may be described as being "visible" with respect to that user or other entity. As an example, and not by way of limitation, a user of the messaging application may specify privacy settings for a user-profile page that identify a set of users that may access work-experience information on the user-profile page, thus excluding other users from accessing that information.

In particular examples, privacy settings for an object may specify a "blocked list" and/or a "restricted list" of users or other entities that should not be allowed to access certain information associated with the object. In particular examples, the blocked list may include third-party entities with whom a user does not want to communicate. The blocked list or restricted list may specify one or more users or entities for which an object is not visible. As an example, and not by way of limitation, a user may specify a set of users who may not access photo albums associated with the user, thus excluding those users from accessing the photo albums (while also possibly allowing certain users not within the specified set of users to access the photo albums). In particular examples, privacy settings may be associated with particular social-graph elements. Privacy settings of a social-graph element, such as a node or an edge, may specify how the social-graph element, information associated with the social-graph element, or objects associated with the social-graph element can be accessed using the online social network. As an example, and not by way of limitation, a particular concept node corresponding to a particular photo may have a privacy setting specifying that the photo may be accessed only by users tagged in the photo and friends of the users tagged in the photo. In particular examples, privacy settings may allow users to opt in to or opt out of having their content, information, or actions stored/logged by the social-networking system or shared with other systems (e.g., a third-party system). Although this disclosure describes using particular privacy settings in a particular manner, this disclosure contemplates using any suitable privacy settings in any suitable manner.

In particular examples, privacy settings may be based on one or more nodes or edges of a social graph. A privacy setting may be specified for one or more edges or edge-types of the social graph, or with respect to one or more nodes or node-types of the social graph. The privacy settings applied to a particular edge connecting two nodes may control whether the relationship between the two entities corresponding to the nodes is visible to other users of the messaging application network. Similarly, the privacy settings applied to a particular node may control whether the user or concept corresponding to the node is visible to other users of the messaging application network. As an example, and not by way of limitation, a first user may share an object to a communication platform associated with a messaging application. The object may be associated with a concept node connected to a user node of the first user by an edge. The first user may specify privacy settings that apply to a particular edge connecting to the concept node of the object or may specify privacy settings that apply to all edges connecting to the concept node. As another example and not by way of limitation, the first user may share a set of objects of a particular object-type (e.g., a set of images). The first user may specify privacy settings with respect to all objects associated with the first user of that particular object-type as having a particular privacy setting (e.g., specifying that all images posted by the first user are visible only to friends of the first user and/or users tagged in the images).

In particular examples, the communication platform associated with the messaging application may present a "privacy wizard" (e.g., within a webpage, a module, one or more dialog boxes, or any other suitable interface) to the first user to assist the first user in specifying one or more privacy settings. The privacy wizard may display instructions, suitable privacy-related information, current privacy settings, one or more input fields for accepting one or more inputs from the first user specifying a change or confirmation of privacy settings, or any suitable combination thereof. In particular examples, the communication platform may offer a "dashboard" functionality to the first user that may display, to the first user, current privacy settings of the first user. The dashboard functionality may be displayed to the first user at any appropriate time (e.g., following an input from the first user summoning the dashboard functionality, following the occurrence of a particular event or trigger action). The dashboard functionality may allow the first user to modify one or more of the first user's current privacy settings at any time, in any suitable manner (e.g., redirecting the first user to the privacy wizard).

Privacy settings associated with an object may specify any suitable granularity of permitted access or denial of access, including the "restrict" functionality described herein. As an example and not by way of limitation, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of particular university), all users ("public"), no users ("private"), users of third-party systems, particular applications (e.g., third-party applications, external websites), other suitable entities, or any suitable combination thereof. Although this disclosure describes particular granularities of permitted access or denial of access, this disclosure contemplates any suitable granularities of permitted access or denial of access.

In particular examples, one or more servers may be authorization/privacy servers for enforcing privacy settings. In response to a request from a user (or other entity) for a particular object stored in a data store, the communication platform may send a request to the data store for the object. The request may identify the user associated with the request and the object may be sent only to the user (or a client system of the user) if the authorization server determines that the user is authorized to access the object based on the privacy settings associated with the object. If the requesting user is not authorized to access the object, the authorization server may prevent the requested object from being retrieved from the data store or may prevent the requested object from being sent to the user. In the search-query context, an object may be provided as a search result only if the querying user is authorized to access the object, e.g., if the privacy settings for the object allow it to be surfaced to, discovered by, or otherwise visible to the querying user. In particular examples, an object may represent content that is visible to a user through a newsfeed of the user. As an example, and not by way of limitation, one or more objects may be visible to a user's "Trending" page. In particular examples, an object may correspond to a particular user. The object may be content associated with the particular user or may be the particular user's account or information stored on the communication platform, or other computing system. As an example, and not by way of limitation, a first user may view one or more second users of an online messaging application network through a "People You May Know" function of the online messaging application network, or by viewing a list of friends of the first user. As an example, and not by way of limitation, a first user may specify that they do not wish to see objects associated with a particular second user in their newsfeed or friends list. If the privacy settings for the object do not allow it to be surfaced to, discovered by, or visible to the user, the object may be excluded from the search results. Although this disclosure describes enforcing privacy settings in a particular manner, this disclosure contemplates enforcing privacy settings in any suitable manner.

In particular examples, different objects of the same type associated with a user may have different privacy settings. Different types of objects associated with a user may have different types of privacy settings. As an example, and not by way of limitation, a first user may specify that the first user's status updates are public, but any images shared by the first user are visible only to the first user's friends on the online messaging application network. As another example and not by way of limitation, a user may specify different privacy settings for different types of entities, such as individual users, friends-of-friends, followers, user groups, or corporate entities. As another example and not by way of limitation, a first user may specify a group of users that may view videos posted by the first user, while keeping the videos from being visible to the first user's employer. In particular examples, different privacy settings may be provided for different user groups or user demographics. As an example, and not by way of limitation, a first user may specify that other users who attend the same university as the first user may view the first user's pictures, but that other users who are family members of the first user may not view those same pictures.

In particular examples, the communication platform may provide one or more default privacy settings for each object of a particular object-type. A privacy setting for an object that is set to a default may be changed by a user associated with that object. As an example, and not by way of limitation, all images posted by a first user may have a default privacy setting of being visible only to friends of the first user and, for a particular image, the first user may change the privacy setting for the image to be visible to friends and friends-of-friends.

In particular examples, privacy settings may allow a first user to specify (e.g., by opting out, by not opting in) whether the communication platform may receive, collect, log, or store particular objects or information associated with the user for any purpose. In particular examples, privacy settings may allow the first user to specify whether particular applications or processes may access, store, or use particular objects or information associated with the user. The privacy settings may allow the first user to opt in or opt out of having objects or information accessed, stored, or used by specific applications or processes. The communication platform may access such information in order to provide a particular function or service to the first user, without the communication platform having access to that information for any other purposes. Before accessing, storing, or using such objects or information, the communication platform may prompt the user to provide privacy settings specifying which applications or processes, if any, may access, store, or use the object or information prior to allowing any such action. As an example, and not by way of limitation, a first user may transmit a message to a second user via an application related to the online messaging network (e.g., a messaging app), and may specify privacy settings that such messages should not be stored by the social-networking system.

In particular examples, a user may specify whether particular types of objects or information associated with the first user may be accessed, stored, or used by the communication platform. As an example, and not by way of limitation, the first user may specify that images sent by the first user through the communication platform (a messaging application associated therewith) may not be stored by the communication platform. As another example and not by way of limitation, a first user may specify that messages sent from the first user to a particular second user may not be stored by the communication platform. As yet another example and not by way of limitation, a first user may specify that all objects sent via a particular application may be saved by the communication platform.

In particular examples, privacy settings may allow a first user to specify whether particular objects or information associated with the first user may be accessed from particular client systems or third-party systems. The privacy settings may allow the first user to opt in or opt out of having objects or information accessed from a particular device (e.g., the phone book on a user's smart phone), from a particular application (e.g., a messaging app), or from a particular system (e.g., an email server). The communication platform may provide default privacy settings with respect to each device, system, or application, and/or the first user may be prompted to specify a particular privacy setting for each context. As an example, and not by way of limitation, the first user may utilize a location-services feature of the communication platform to provide recommendations for restaurants or other places in proximity to the user. The first user's default privacy settings may specify that the communication platform may use location information provided from a client device of the first user to provide the location-based services, but that the communication platform may not store the location information of the first user or provide it to any third-party system. The first user may then update the privacy settings to allow location information to be used by a third-party image-sharing application in order to geo-tag photos.

### Privacy Settings for Mood, Emotion, or Sentiment Information

In particular examples, privacy settings may allow a user to specify whether current, past, or projected mood, emotion, or sentiment information associated with the user may be determined, and whether particular applications or processes may access, store, or use such information. The privacy settings may allow users to opt in or opt out of having mood, emotion, or sentiment information accessed, stored, or used by specific applications or processes. The communication platform may predict or determine a mood, emotion, or sentiment associated with a user based on, for example, inputs provided by the user and interactions with particular objects, such as based on messages sent by the user, and interactions with other content of the online messaging network. In particular examples, the communication platform may use a user's previous activities and calculated moods, emotions, or sentiments to determine a present mood, emotion, or sentiment. A user who wishes to enable this functionality may indicate in their privacy settings that they opt in to the communication platform receiving the inputs necessary to determine the mood, emotion, or sentiment. As an example, and not by way of limitation, the communication platform may determine that a default privacy setting is to not receive any information necessary for determining mood, emotion, or sentiment until there is an express indication from a user that the communication platform may do so. By contrast, if a user does not opt in to the communication platform receiving these inputs (or affirmatively opts out of the communication platform receiving these inputs), the communication platform may be prevented from receiving, collecting, logging, or storing these inputs or any information associated with these inputs. In particular examples, the communication platform may use the predicted mood, emotion, or sentiment to provide recommendations or advertisements to the user. In particular examples, if a user desires to make use of this function for specific purposes or applications, additional privacy settings may be specified by the user to opt in to using the mood, emotion, or sentiment information for the specific purposes or applications. As an example, and not by way of limitation, the communication platform may use the user's mood, emotion, or sentiment to provide newsfeed items, pages, friends, or advertisements to a user. The user may specify in their privacy settings that the communication platform may determine the user's mood, emotion, or sentiment. The user may then be asked to provide additional privacy settings to indicate the purposes for which the user's mood, emotion, or sentiment may be used. The user may indicate that the communication platform may use his or her mood, emotion, or sentiment to provide newsfeed content and recommend pages, but not for recommending friends or advertisements. The communication platform may then only provide newsfeed content or pages based on user mood, emotion, or sentiment, and may not use that information for any other purpose, even if not expressly prohibited by the privacy settings.

### Privacy Settings for Ephemeral Sharing

In particular examples, privacy settings may allow a user to engage in the ephemeral sharing of objects on the online messaging network. Ephemeral sharing refers to the sharing of objects (e.g., posts, photos) or information for a finite period of time. Access or denial of access to the objects or information may be specified by time or date. As an example, and not by way of limitation, a user may specify that a particular message sent by the user is visible to the user's friends for the next week, after which time the message may no longer be accessible to other users. As another example and not by way of limitation, a company may post content related to a product release ahead of the official launch and specify that the content may not be visible to other users until after the product launch.

In particular examples, for particular objects or information having privacy settings specifying that they are ephemeral, the communication platform may be restricted in its access, storage, or use of the objects or information. The communication platform may temporarily access, store, or use these particular objects or information in order to facilitate particular actions of a user associated with the objects or information, and may subsequently delete the objects or information, as specified by the respective privacy settings. As an example, and not by way of limitation, a first user may transmit a message to a second user, and the communication platform may temporarily store the message in a data store until the second user has viewed or downloaded the message, at which point the communication platform may delete the message from the data store. As another example and not by way of limitation, continuing with the prior example, the message may be stored for a specified period of time (e.g., 2 weeks), after which point the communication platform may delete the message from the data store.

### Privacy Settings for User-Authentication and Experience-Personalization Information

In particular examples, the communication platform may have functionalities that may use, as inputs, personal or biometric information of a user for user-authentication or experience-personalization purposes. A user may opt to make use of these functionalities to enhance their experience on the online messaging network. As an example, and not by way of limitation, a user may provide personal or biometric information to the social-networking system. The user's privacy settings may specify that such information may be used only for particular processes, such as authentication, and further specify that such information may not be shared with any third-party system or used for other processes or applications associated with the communication platform. As another example and not by way of limitation, the communication platform may provide a functionality for a user to provide voice-print recordings to the online messaging network. As an example, and not by way of limitation, if a user wishes to utilize this function of the online messaging network, the user may provide a voice recording of his or her own voice to provide a status update on the online messaging network. The recording of the voice-input may be compared to a voice print of the user to determine what words were spoken by the user. The user's privacy setting may specify that such voice recording may be used only for voice-input purposes (e.g., to authenticate the user, to send voice messages, to improve voice recognition in order to use voice-operated features of the online social network), and further specify that such voice recording may not be shared with any third-party system or used by other processes or applications associated with the communication platform. As another example and not by way of limitation, the communication platform may provide a functionality for a user to provide a reference image (e.g., a facial profile, a retinal scan) to the online messaging network. The online messaging network may compare the reference image against a later-received image input (e.g., to authenticate the user, to tag the user in photos). The user's privacy setting may specify that such voice recording may be used only for a limited purpose (e.g., authentication, tagging the user in photos), and further specify that such voice recording may not be shared with any third-party system or used by other processes or applications associated with the communication platform.

### User-Initiated Changes to Privacy Settings

In particular examples, changes to privacy settings may take effect retroactively, affecting the visibility of objects and content shared prior to the change. As an example, and not by way of limitation, a first user may share a first image and specify that the first image is to be public to all other users. At a later time, the first user may specify that any images shared by the first user should be made visible only to a first user group. The communication platform may determine that this privacy setting also applies to the first image and make the first image visible only to the first user group. In particular examples, the change in privacy settings may take effect only going forward. Continuing the example above, if the first user changes privacy settings and then shares a second image, the second image may be visible only to the first user group, but the first image may remain visible to all users. In particular examples, in response to a user action to change a privacy setting, the communication platform may further prompt the user to indicate whether the user wants to apply the changes to the privacy setting retroactively. In particular examples, a user change to privacy settings may be a one-off change specific to one object. In particular examples, a user change to privacy may be a global change for all objects associated with the user.

In particular examples, the communication platform may determine that a first user may want to change one or more privacy settings in response to a trigger action associated with the first user. The trigger action may be any suitable action on the online messaging network. As an example, and not by way of limitation, a trigger action may be a change in the relationship between a first and second user of the online messaging network (e.g., "un-friending" a user, changing the relationship status between the users). In particular examples, upon determining that a trigger action has occurred, the communication platform may prompt the first user to change the privacy settings regarding the visibility of objects associated with the first user. The prompt may redirect the first user to a workflow process for editing privacy settings with respect to one or more entities associated with the trigger action. The privacy settings associated with the first user may be changed only in response to an explicit input from the first user and may not be changed without the approval of the first user. As an example and not by way of limitation, the workflow process may include providing the first user with the current privacy settings with respect to the second user or to a group of users (e.g., un-tagging the first user or second user from particular objects, changing the visibility of particular objects with respect to the second user or group of users), and receiving an indication from the first user to change the privacy settings based on any of the methods described herein, or to keep the existing privacy settings.

In particular examples, a user may need to provide verification of a privacy setting before allowing the user to perform particular actions on the online messaging network, or to provide verification before changing a particular privacy setting. When performing particular actions or changing a particular privacy setting, a prompt may be presented to the user to remind the user of his or her current privacy settings and to ask the user to verify the privacy settings with respect to the particular action. Furthermore, a user may need to provide confirmation, double-confirmation, authentication, or other suitable types of verification before proceeding with the particular action, and the action may not be complete until such verification is provided. As an example, and not by way of limitation, a user's default privacy settings may indicate that a person's relationship status is visible to all users (i.e., "public"). However, if the user changes his or her relationship status, the communication platform may determine that such action may be sensitive and may prompt the user to confirm that his or her relationship status should remain public before proceeding. As another example and not by way of limitation, a user's privacy settings may specify that the user's posts are visible only to friends of the user. However, if the user changes the privacy setting for his or her posts to being public, the communication platform may prompt the user with a reminder of the user's current privacy settings of posts being visible only to friends, and a warning that this change will make all of the user's past posts visible to the public. The user may then be required to provide a second verification, input authentication credentials, or provide other types of verification before proceeding with the change in privacy settings. In particular examples, a user may need to provide verification of a privacy setting on a periodic basis. A prompt or reminder may be periodically sent to the user based either on time elapsed or a number of user actions. As an example, and not by way of limitation, the communication platform may send a reminder to the user to confirm his or her privacy settings every six months or after every ten photo posts. In particular examples, privacy settings may also allow users to control access to the objects or information on a per-request basis. As an example, and not by way of limitation, the communication platform may notify the user whenever a third-party system attempts to access information associated with the user and require the user to provide verification that access should be allowed before proceeding.

### EXAMPLE SYSTEM ARCHITECTURE

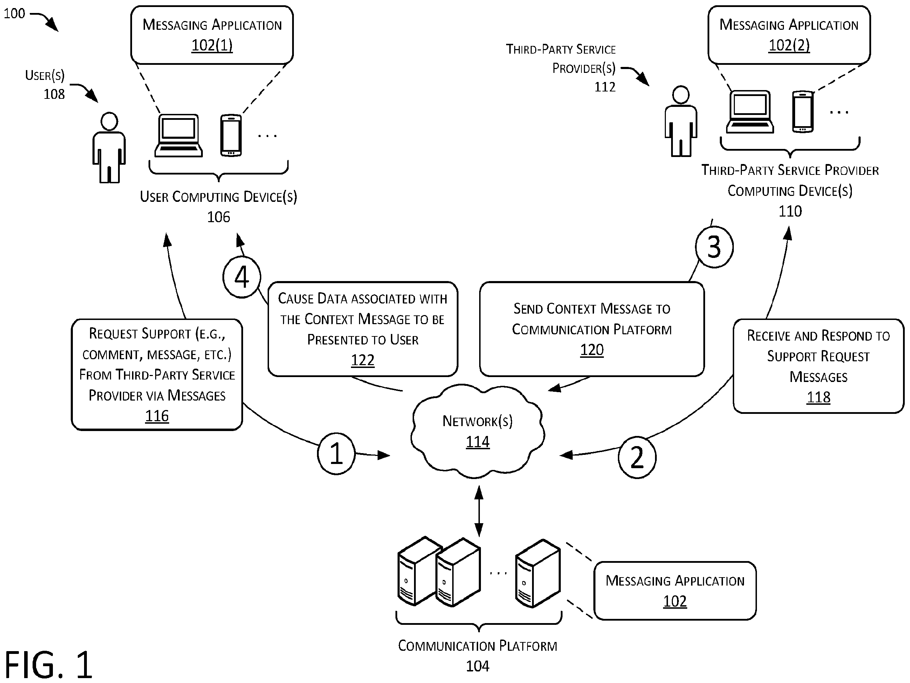

FIG. 1 is a schematic view of an example system 100 usable to implement the techniques described herein to provide context identifiers or other context indicators (e.g., context header, summary, etc.) for conversation threads on a messaging application 102 via the system 100. In some examples, the system may include a communication platform 104 configured to manage the messaging application 102, such as to provide a means of messaging between one or more user computing devices 106 (e.g., user device(s) 106) associated with one or more users 108 and one or more third-party service provider computing devices 110 (e.g., third-party device(s) 110) associated with one or more third party service providers 112. In various examples, the user device(s) 106 may include a first instance of the messaging application 102(1) and the third-party devices 110 may include a second instance of the messaging application 102(2), to facilitate communications between the user(s) 108 and the third-party service provider(s) 112.

Each of the user computing device(s) 106 and the third-party device(s) 110 include one or more processors and memory storing computer executable instructions to implement the functionality discussed herein attributable to the respective computing devices. In some examples, the user computing device(s) 106 and the third-party device(s) 110 may include desktop computers, laptop computers, tablet computers, mobile devices (e.g., smart phones or other cellular or mobile phones, mobile gaming devices, portable media devices, etc.), or other suitable computing devices. The user computing device(s) 106 and the third-party device(s) 110 may execute one or more client applications, such as a web browser (e.g., Microsoft Windows Internet Explorer, Mozilla Firefox, Apple Safari, Google Chrome, Opera, etc.) or a native or special-purpose client application (e.g., social media applications, messaging applications, email applications, games, etc.), to access and view content over network 114.

In various examples, the third-party device 110 may include a single computing device. In some examples, the third-party device 110 may include one or more servers or other computing devices, any or all of which may include one or more processors and memory storing computer executable instructions to implement the functionality described herein. In some examples, the second instance of the messaging application 102(2) may include a messaging API configured to provide the third-party service provider(s) 112 functionalities within the second instance of the messaging application 102(2) that differ from the first instance of the messaging application 102(1). In some examples, the messaging API may include an enterprise client that enables multiple agents associated with the third-party service provider(s) 112 to access and respond to messages from user(s) 108 over the network 114.

Network 114 may represent a network or collection of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which the user computing device(s) 106 and the third-party device(s) 110 may access the communication platform 104 and/or communicate with one another.

The communication platform 104 may include one or more servers or other computing devices, any or all of which may include one or more processors and memory storing computer executable instructions to implement the functionality discussed herein attributable to the social networking system or digital platform. The communication platform 104 may enable the user(s) 108 and the third-party service provider(s) 112 to communicate with one another via the first instance of the messaging application 102(1) on the user device(s) 106 and the second instance of the messaging application 102(2) on the third-party device(s) 110. The communication platform 104 may manage the messaging application 102, including the first instance of the messaging application 102(1) and the second instance of the messaging application 102(2), to facilitate communications between the user(s) 108 and the third-party service provider(s) 112.

In various examples, the communication platform 104 may store user data associated with the user(s) 108 and the third-party service provider(s) 110, such as in a messaging account associated therewith. The user data may include a type of user (e.g., customer, merchant, etc.), identifiers associated with the user (e.g., telephone number, IP address, other identifiers etc.), previous conversation threads associated with the user(s) 108 and the third-party service provider(s) 110, and the like. In at least one example, the user data may include permissions to view metadata associated with messages in a message thread.

FIG. 1 illustrates an example in which, at operation 116, a user 108 may request support from a third-party service provider 112 via one or more messages. Though illustrated as a request for support from a customer service representative, the techniques described herein may also be applied to any other type of messaging with a third-party service provider or other party via a messaging application 102. The message(s) may be sent from a user computing device 106 via a first instance of the messaging application 102. In various examples, the user may launch the first instance of the messaging application 102 on the user computing device 106, input a message of the one or more messages, address the message to an identifier associated with the third-party service provider 112, and cause the message to be sent as a support request. The support request may include a request to resolve a customer issue, an inquiry about a particular product, a request to place an order and/or a reservation, or any other reason a customer may contact a customer service representative associated with the third-party service provider 112 or a merchant.

In various examples, the communication platform 104 may process the message(s) via the messaging application. In various examples, responsive to receiving a first message associated with the support request, the communication platform 104 may associate the message with a conversation thread (e.g., thread) in the messaging application 102. In such examples, each subsequent message sent regarding the support request may be associated with the conversation thread. The conversation thread may be viewable by the user 108 via the first instance of the application 102(1) and the third-party service provider 112 via the second instance of the application 102(2). In some examples, the communication platform 104 may cause a date and/or time associated with the first message of the conversation thread to be published proximate the first message (e.g., immediately above, to the right of, to the left of, etc.).

In various examples, the communication platform 104 may associate a message sent between the user 108 and the third-party service provider 112 with the conversation thread based on a determination that the message is sent from one party or the other within a threshold period of time of a preceding message (e.g., 5 minutes, 15 minutes, 1 hour, etc.). In such examples, the communication platform 104 may determine that messages are related to one another based on the threshold time between messages.

In some examples, the communication platform 104 may assign an identifier (e.g., numbers, letters, symbols, etc.) to each message of the conversation thread. In such examples, each message sent between the user 108 and the third-party service provider 112 may have associated therewith a particular identifier.

At operation 118, the third-party service provider 112 may receive the message(s) from the communication platform 104 via the second instance of the messaging application 102(2). In some examples, the communication platform 104 may determine that the third-party service provider 112 may have permissions to view metadata associated with the message(s). In such examples, the communication platform 104 may provide a means by which the third-party service provider 112 may view the metadata, such as to view an identifier associated with the message(s).

Additionally, at operation 118, the third-party service provider 112 may respond to the message(s) from the user 108. The communication platform 104 may associated the response messages sent to the user 108 from the third-party service provider 112 with the conversation thread in the messaging application 102. In various examples, the third-party service provider 112 may send response messages to the user 108, such as to request information from the user 108 regarding the support request. In some examples, the response messages may be generated to determine a context associated with the support request. The context may include a transaction between the user 108 and the third-party service provider 112 (e.g., an issue with delivery of an item (e.g., not delivered, late delivery, etc.), an issue with a particular item (e.g., not operable, damaged in transit, return, requested refund, etc.), questions regarding an item and/or delivery, etc.) or any other reason a user would request support from the third-party service provider 112.

Based on a determination of the context associated with the support request, the third-party service provider 112, at operation 120, may send a context message to the communication platform 104. The context message may include a summary (e.g., context) associated with the conversation thread. The summary may include relevant information for the user 108 to quickly assess the context associated with the conversation thread, such as without having to read the contents of the messages associated therewith. As non-limiting examples, the summary may include data such as an order identifier and/or date associated with an order (e.g., transaction) between the user 108 and the third-party service provider 112, a delivery update, a refund identifier, a return identifier, a topic associated with the conversation thread (e.g., item not delivered, item inoperable, refund requested, etc.), a resolution associated with the conversation thread (e.g., refund processed, missing item to be re-delivered, discount for delivery delay applied, coupon for future transaction delivered, etc.).

Based on receipt of the context message, at operation 122, the communication platform 104 may cause the data associated with the context message to be presented to the user 108. In various examples, the data presented to the user 108 may include the summary associated with the conversation thread. The data presented to the user 108 may additionally include dates and/or times associated with the conversation thread.

The data may be presented to the user 108 via the first instance of the messaging application 102(1). In various examples, data may be presented at a position proximate a message the conversation thread. In at least one example, the data may be presented above the messages of the conversation thread. In various examples, the communication platform 104 may cause the data to be presented based on a determination that at least one message of the conversation thread is presented on a display of the user device 106. In such examples, the data may be presented based on a determination that a first message associated with the conversation thread, a last message associated with the conversation thread, or any message in between the first message and the last message is viewable to the user 108 via the first instance of the messaging application 102. For example, as a user 108 scrolls between a first message and a last message of a conversation thread, the data representative of a context identifier for the conversation thread may be presented proximate the displayed messages. Responsive to an indication that the user 108 scrolls outside of the conversation thread (e.g., to messages prior to the first message and/or messages after the last message), the data will no longer be presented on the display. Responsive to another indication that the user 108 scrolls back to the conversation thread, the data may again be presented on the display.

In various examples, the third-party service provider 112 may send updated context messages to the communication platform 104, such as based on an update to the conversation thread. In some examples, the third-party service provider 112 may provide a first context message responsive to determining an initial context of a support request. In such examples, the data associated with the first context message may be presented to the user 108 as an initial summary (e.g., initial context) of the support request. In various examples, the third-party service provider 112 may provide a second context message based on a determination that a response to the service request has been initiated (e.g., refund, return, re-delivery, etc.). In such examples, the data associated with the context message presented to the user 108 may provide real-time relevant information associated with the support request.

### Example User Interfaces

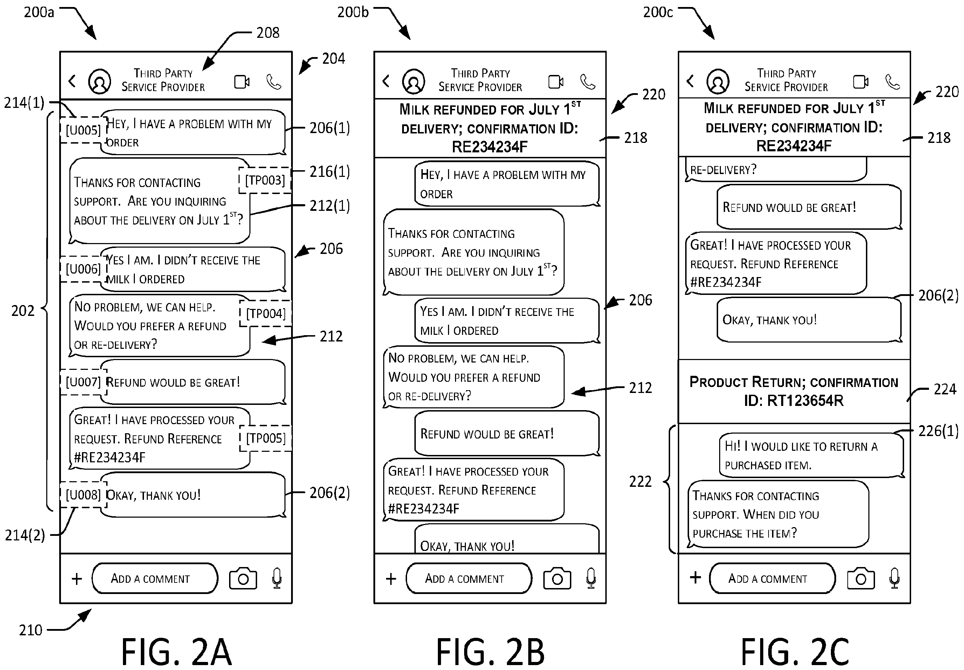

FIG. 2A - FIG. 4B are schematic views showing example user interfaces that are usable to implement the techniques described herein for providing context identifiers for conversation threads. The interfaces may be generated by a computing device of a communication platform (e.g., communication platform 104) and transmitted to one or more user computing devices (e.g., user device(s) 106) and/or one or more third-party service provider computing devices (e.g., third-party device(s) 110) for presentation. Additionally or alternatively, the interfaces may be generated by the user computing device(s) and/or the third-party service provider computing device(s) based at least in part on instructions received from the communication platform. As discussed above, the interfaces described in this section may, but need not, be implemented in the context of the system 100.

FIGS. 2A - 2C illustrate an example interface in which a context identifier may be displayed in association with a conversation thread 202. Interface 200a shown in FIG. 2A illustrates a messaging page 204 associated with a messaging application. In some examples, a user may be able compose outgoing messages 206 to another party 208 via the messaging page 204, such as in the "ADD A COMMENT" section 210. Additionally, the messaging page 204 may include incoming messages 212 received from the other party 208. As illustrated in FIG. 2A, the outgoing messages 206 may be aligned on a right side of the interface 200a, while the incoming messages 212 may be aligned on a left side of the interface 200a. However, this is merely an illustrative example, an any other organization of the messages 206 and 212 is contemplated herein, such as centered justification of the messages 206 and 212, outgoing messages 206 aligned left and incoming messages 212 aligned right, and the like. Additionally or alternatively, the outgoing messages 206 may be distinguished from the incoming messages 212 by color coded bubbles, color coded font, different fonts, different formatting, or the like.

In the illustrative example of FIG. 2A the other party 208 includes a third-party service provider. In other examples, the other party 208 may include another person or entity with whom the user may have a messaging conversation (e.g., conversation thread 202). In some examples, the other party 208 may be identified based on an identifier. In some examples, the identifier may include a phone number associated with the other party 208, a user number associated with the other party 208, such as that generated by a communication platform in establishing an account associated with the messaging application, or the like. In some examples, the other party 208 may be identified based on a name associated with the other party 208, an alias (e.g., customer_service@merchant, info@merchant, etc.), an Internet protocol address, or the like.

As discussed above, the communication platform may be configured to process the outgoing messages 206 and the incoming messages 212. In some examples, the processing may include transmitting the respective messages 206 and 212 to the intended party (e.g., transmitting outgoing messages 206 to the other party 208). In some examples, the processing may include causing the respective messages 206 and 212 to be presented in chronological order, such as based on a time at which each of the messages 206 and/or 212 are sent.

In various examples, the processing may include assigning an outgoing message identifier 214 to each outgoing message 206, such as a first outgoing message identifier 214(1) to a first outgoing message 206(1) and an incoming message identifier 216 to each incoming message 212, such as a first incoming message identifier 216(1) to a first incoming message 212(1). Though shown on the messaging page 204 of the interface 200a in FIG. 2A, this is merely for illustrative purposes, and the message identifiers 214 and 216 may, in some examples, not be visible to a user via the interface 200a.

In some examples, the respective message identifiers 214 and 216 may be based in part on the party (e.g., user or other party 208) who generated the message. In such examples, the message identifiers 214 and 216 may include a letter, number, and/or symbol associated with the respective party. In the illustrative example, the user-generated messages (outgoing messages 206) have associated therewith outgoing message identifiers 214 that start with a "U" for "user" and the third-party generated messages (incoming messages 212) have associated therewith incoming message identifiers 216 that begin with a "TP" for "Third-Party." Though this is merely an example, and any combination of letters, numbers, and/or symbols are contemplated herein.

In some examples, the respective message identifiers 214 and 216 may be based in part on the time in which the messages are sent. In some examples, the message identifiers 214 and 216 may be chronological based on the party who generated the message. For example, outgoing messages 206 may be numbered in a first chronological order and incoming messages 212 may be numbered in a second chronological order. In some examples, the respective message identifiers 214 and 216 may be chronological based on a message thread. In such examples, the identifiers 214 and 216 may be chronological with respect to one another. For example, a first outgoing message identifier 214(1) may include #01, a first incoming message identifier 216(1) may include numbered #02, and the like.

In various examples, the communication platform may provide the message identifiers 214 and/or 216 and/or other metadata (e.g., date/ time associated with messages, etc.) to the user and/or the other party 208. In some examples, the communication platform may provide the numbers and/or other metadata based on a type of account, type of user, access permissions, or the like of the user and/or the other party 208. For example, the other party 208, a third-party service provider, may be a merchant with a merchant account including permissions to view metadata associated with the messages, such as message identifiers 214 and/or 216. Based on the merchant account and associated permissions, the communication platform may provide the message identifiers 214 and 216 and/or other metadata to the other party 208.

In various examples, the other party 208 (e.g., the third-party service provider) may generate a context message associated with the conversation thread 202. The context message may include a summary of the conversation thread 202. The summary may include a brief statement of the main point (e.g., overall topic) associated with the conversation thread 202. The summary may include data such as an order identifier and/or date associated with an order (e.g., transaction) between the user and the other party 208, a delivery update, a refund identifier, a return identifier, a topic associated with the conversation thread (e.g., item not delivered, item inoperable, refund requested, etc.), a resolution associated with the conversation thread (e.g., refund processed, missing item to be re-delivered, discount for delivery delay applied, coupon for future transaction delivered, etc.).

In various examples, the context message may include message identifiers 214 and/or 216 associated with the messages 206 and/or 212 in the conversation thread 202. In at least one example, the context message may identify a first message in the conversation thread 202, such as outgoing message 206(1) by outgoing message identifier 214(1), and a last message in the conversation thread, such as outgoing message 206(2), identified by outgoing message identifier 214(2). For example, a context message associated with the conversation thread 202 may include the following data: [Summary: Milk refunded for July 1^{st} delivery, confirmation ID: RE234234F; contextStartMsgId: U005; contextEndMsgId: U008]. Based on an identification of the first message and the last message in the conversation thread 202, the communication platform may be configured to associate the messages in between the first message and the last message with the conversation thread 202.

Interface 200b shown in FIG. 2B illustrates the conversation thread 202 on the messaging page 204 with a context identifier 218. In various examples, the communication platform may receive the context message from the other party 208 and may identify the data to be displayed on the context identifier 218. In the illustrative example, the context identifier 218 includes the summary of the conversation thread 202 provided in the context message. In other examples, the context identifier 218 may include additional information, such as a date and/or time associated with the conversation thread 202, a selectable control to enable the user to continue the conversation, a selectable control to enable the user to minimize the conversation (e.g., hide the messages 206 and/or 212), or the like.

In the illustrative example, the context identifier 218 is displayed at the top of a viewing window (e.g., top of a user interface associated with the messaging application) before the associated messages 206 and/or 212 (e.g., messages of the associated conversation thread 202. As a frame of reference, the top of the viewing window may correspond to a top of a display of a device associated with the (user) interface 200b. Though illustrated as a vertical mode (e.g., portrait mode), it is understood that the device may be rotated 90 degrees to a horizontal mode (e.g., landscape mode). In such an action, the interface 200b may rotate 90 degrees, such that the messages are readable in the horizontal mode. In a horizontal mode, the context identifier 218 may stick to the top of the viewing window associated therewith (e.g., in the landscape mode), with the messages displayed after the context identifier 218.

In other examples, the context identifier 218 may be displayed at the bottom, sides, center, or any other location in the viewing pane 220 and proximate the messages of the associated conversation thread 202, regardless of the orientation of the device. In some examples, the context identifier 218 may be anchored in place in the viewing window. In such examples, the context identifier 218 may remain at a location (e.g., stick to a location) in the viewing window. For example, a context identifier 218 may stick to the top of viewing window associated with the messaging application on interface 200b (e.g., the user interface). The user may scroll up and down throughout messages 206 and 212 of the conversation thread 202. Based on a determination that at least one message 206 and/or 212 of the conversation thread 202 is visible, the context identifier 218 will remain at the location at the top of the viewing window.

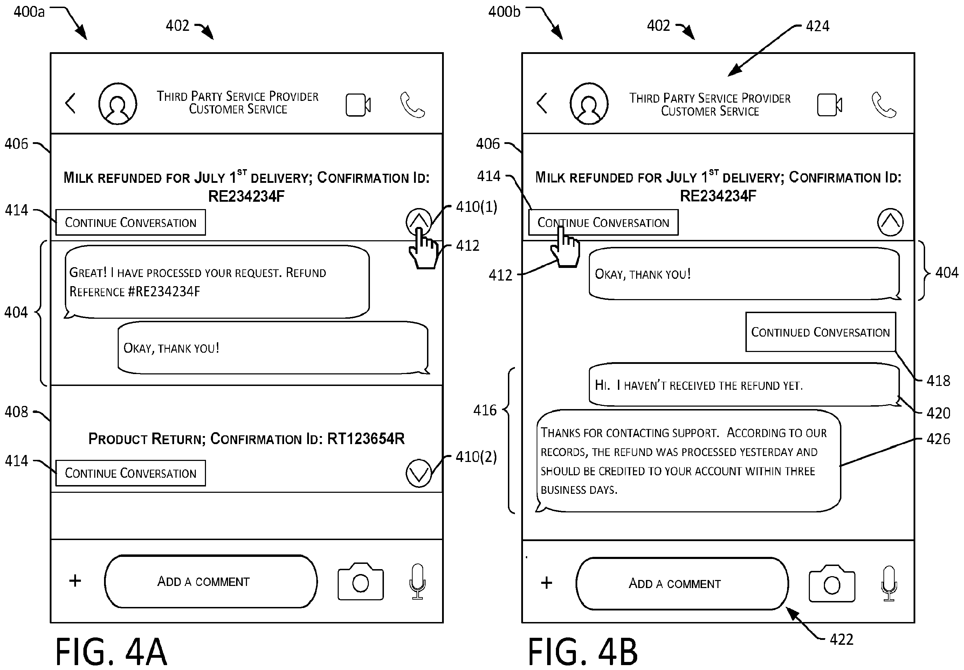

As will be discussed in further detail below with regard to FIGS. 4A and 4B, the context identifier 218 may be displayed in lieu of the conversation thread 202. In such examples, the conversation thread 202 may be minimized, such as via a selectable control to hide the conversation thread 202. In some examples, the selectable control may be selected a second time to re-display the conversation thread 202. In such examples, the communication platform may receive an indication of selection of the selectable control to minimize and/or maximize the conversation thread 202 and may cause the messaging application to display or hide the messages 206 and 212 as appropriate.

In various examples, the context identifier 218 may be associated with the conversation thread 202 such that the context identifier 218 and the messages 206 and/or 212 associated with the conversation thread 202 are displayed concurrently. In such examples, the context identifier 218 may be displayed based on a determination that at least one message 206 and/or 212 associated with the conversation thread 202 is displayed via the viewing pane 220.

Interface 200c shown in FIG. 2C illustrates the context identifier 218 position as the user scrolls down to a second conversation thread 222 with a second context identifier 224. As used herein, "down" and "downward" refer to a direction toward a bottom of the interface 200c, regardless of an orientation of the interface on the device. As illustrated in FIG. 2C, the context identifier 218 may be displayed in the viewing pane 220 until the last message 206(2) is no longer visible to the user on the viewing pane 220. In other words, the context identifier 218 may be anchored in place proximate the conversation thread 202 as long at least one message associated with the conversation thread 202 is visible to the user. As the user scrolls down to the second conversation thread 222, such that a first message 226(1) of the second conversation thread 222 is visible, the second context identifier 224 may be displayed, providing a summary associated with the second conversation thread 222. The second context identifier 224 may be presented on the display proximate the first message 226(1) until the user scrolls downward far enough to hide the conversation thread 202 associated with the context identifier 218. Based on a determination that no messages associated with the context identifier 218 are visible (e.g., user scrolls down beyond the last message 206(2)), the context identifier 218 will be hidden from view on the interface 200c, and the second context identifier 224 may anchor into location at the top of the viewing window. Based on a determination that at least one message (e.g., a first message of the second conversation thread 222), the second conversation thread 222 may be visible and may stick to the second conversation thread 222 to provide the user with contextual data.

The context identifiers 218 and 224 may provide the user a summary of the respective conversation threads 202 and 222, enabling the user to quickly determine the context of the respective conversation threads 202 and 222. At least because the user may quickly ascertain the contexts of the conversation threads 202 and 222, the user may be able to identify a relevant conversation thread faster, thereby utilizing less processing power than would otherwise be necessary to identify a relevant conversation thread. Accordingly, the techniques described herein may improve the functioning of the user computing device, by providing additional processing power for other computing functions.

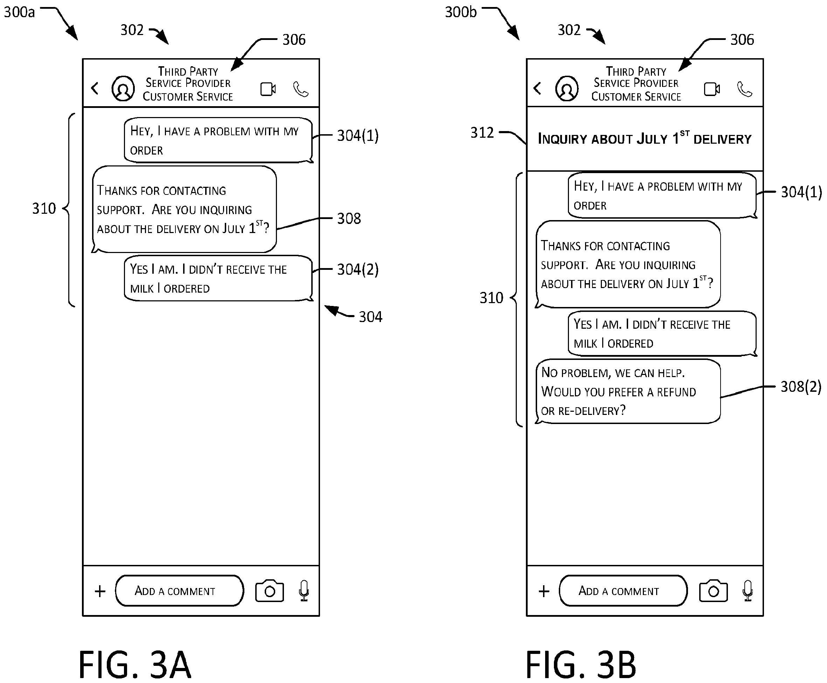

FIGS. 3A - 3D illustrate an example interface in which a first context identifier may be displayed in association with a conversation thread at a first time and a second context identifier may be displayed in association with the conversation thread at a second time. Interface 300a shown in FIG. 3A illustrates a messaging page 302, such as messaging page 204, associated with a messaging application. In some examples, a user may be able compose outgoing messages 304 to another party 306 via the messaging page 302. Additionally, the messaging page 302 may include incoming messages 308 received from the other party 306 and viewable to the user.

As illustrated in FIG. 3A, the user may initiate a conversation thread 310, such as conversation thread 202, by composing a first outgoing message 304(1) to the other party 306. In the illustrative example, the other party 306 may include a customer service representative associated with a third-party service provider and the conversation thread 310 may be associated with an issue the user has with an order corresponding to a transaction with the third-party service provider. Though this is merely an example and any type of person and/or entity capable of conducting a messaging conversation is contemplated herein. For example, the other party 306 may include a computing system configured to receive messages, perform natural language processing on the messages, and determine a context associated therewith. In such examples, the computing system may be configured, such as utilizing machine learning techniques, to generate responses to outgoing messages 304 sent by the user.

In various examples, the other party 208 may receive outgoing messages 304 and send incoming messages 308 and back and forth with the user to determine a context associated with the conversation thread 310. Based on a determination of the context, the other party 306 may generate an initial context message associated with the conversation thread 310. The initial context message may include an initial summary of the conversation thread 310. The initial summary may include a brief statement of the main point (e.g., overall topic) associated with the conversation thread 310. The initial summary may include data such as an order identifier and/or date associated with an order (e.g., transaction) between the user and the other party 306, a general topic associated with the conversation thread 310 (e.g., inquiry about delivery, etc.).

The initial context message may additionally identify one or more messages 304 and/or 308 associated with the conversation thread 310. In at least one example, the initial context message may include a start message identifier associated with a first message in the conversation thread 310 and an end message identifier associated with a last message in the conversation thread 310 at the initial time (e.g., first time, associated with the initial context message, etc.). In various examples, the identifiers may be provided to the other party 306 by a communication platform.

Interface 300b shown in FIG. 3B illustrates the conversation thread 310 on the messaging page 302 with an initial context identifier 312. The other party 306 may send the initial context message with the initial summary and the first and last message associated with the conversation thread 310 to the communication platform. The communication platform may cause the messaging application on the interface 300b to display the context identifier 312 in association with the conversation thread 310. In various examples, the initial context identifier 312 may be displayed concurrently with one or more messages of the conversation thread 310. In such example, based on a determination that at least one message of the conversation thread is visible to the user via the interface 300b, the initial context identifier 312 is also visible.

In various examples, the other party 306 may continue the conversation thread 310, such as with incoming message 308(2), to determine a resolution to the problem introduced by the user. The communication platform may facilitate the communication, such as by processing the messages 304 and 308 between the user and the other party. The user and the other party 306 may send messages 304 and 308 associated with the conversation thread 310 via respective messaging applications and/or the communication platform until the resolution is determined at a second (later) time.

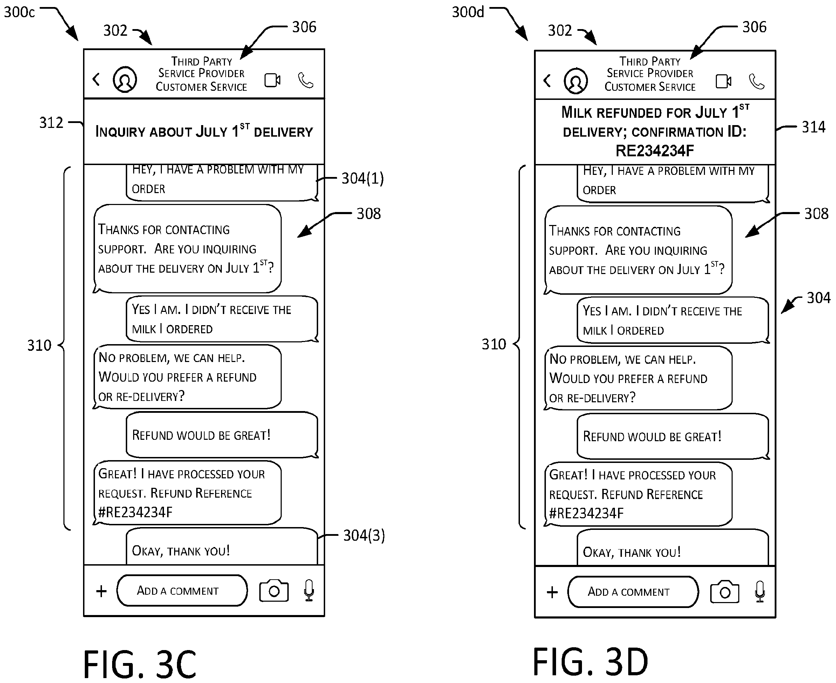

Interface 300c shown in FIG. 3C illustrates a completed conversation thread 310, in which the resolution was reached. The other party 306 may determine that the resolution was reached (satisfactorily) by the response from the user, such as in a last (e.g., final) outgoing message 304(3). In the illustrative example, the user includes a conclusory statement of "Okay, thank you!" in the final outgoing message 304(3). Based on the conclusory statement, the other party 306 may conclude that the resolution has been reached and/or that the conversation thread 310 may be closed (e.g., conversation is finished). In other examples, the other party 306 may expressly ask the user if the resolution is reached, such as by sending an incoming message 308 saying "is there anything else we can help you with?" Responsive to receiving a negative response, such as "no" to the resolution inquiry, the other party 306 may determine that the resolution is reached and the conversation thread 310 may be closed.

Based on a determination that the resolution is reached, the other party 306 may generate an updated context message. The updated context message may include an updated summary of the conversation thread 202. The updated summary may include a brief statement of the main point (e.g., overall topic) associated with the conversation thread 310. The updated summary may include data such as an order identifier and/or date associated with an order (e.g., transaction) between the user and the other party 306, a delivery update, a refund identifier, a return identifier, a topic associated with the conversation thread (e.g., item not delivered, item inoperable, refund requested, etc.), a resolution associated with the conversation thread (e.g., refund processed, missing item to be re-delivered, discount for delivery delay applied, coupon for future transaction delivered, etc.).

In various examples, the updated context message may include message identifiers associated with a first message in the conversation thread 310 such as outgoing message 304(1) and a last message (e.g., final message, updated last message since the initial context message at the first time, etc.) in the conversation thread 310, such as outgoing message 304(3). Based on an identification of the first message (e.g., outgoing message 304(1)) and the last message (e.g., outgoing message 304(3)) in the conversation thread 310, the communication platform may be configured to associate the messages in between the first message and the last message with the conversation thread 310.

Interface 300d shown in FIG. 3D illustrates the conversation thread 310 on the messaging page 302 with an updated context identifier 314. In various examples, the communication platform may receive the updated context message from the other party 306 and may identify the data to be displayed on the updated context identifier 314. The updated context identifier 314 may replace the initial context identifier 312 illustrated in FIGS. 3B and 3C.

In the illustrative example, the updated context identifier 314 includes an updated summary of the conversation thread 310 provided in the context message, including the resolution reached between the user and the other party 306. For example, the updated context identifier 314 includes an indication that the milk was refunded for delivery scheduled for July 1^{st} and a confirmation identifier associated with the refund. In other examples, the updated context identifier 314 may include additional information, such as a date and/or time associated with the conversation thread 310, a selectable control to enable the user to continue the conversation, a selectable control to enable the user to minimize the conversation (e.g., hide the messages 304 and/or 308), or the like. In various examples, the updated context identifier 314 may display a sufficient amount of information to enable the user to quickly ascertain the context of the conversation thread 310.

In various examples, the updated context identifier 314 may be associated with the conversation thread 310 such that the updated context identifier 314 and the messages 304 and/or 308 associated with the conversation thread 310 are displayed concurrently. In such examples, the updated context identifier 314 may be displayed based on a determination that at least one message 304 and/or 308 associated with the conversation thread 310 is displayed via the messaging application on the messaging page 302.

FIGS. 4A and 4B illustrate an example interface usable to enable a user to continue a previously completed conversation with a merchant representative. Interface 400a shown in FIG. 4A illustrates a messaging page 402 associated with a messaging application, the messaging page 402 including a first conversation thread 404 with an associated first context identifier 406 and a second context identifier 408 associated with a second conversation thread (not shown).

In various examples, the first context identifier 406 and the second context identifier 408 may include a first selectable control 410 to enable the user 412 to minimize and maximize the conversation (e.g., hide or display the respective conversation thread, such as conversation thread 404). As illustrated in FIG. 4A, the user 412 may select a selectable control 410(1) associated with the first context identifier 406 (e.g., associated with the first conversation thread 404). Responsive to receiving an indication of selection, the communication platform (via the messaging application) may cause the first conversation thread 404 to be displayed via the messaging page 402. Additionally, responsive to receiving a subsequent indication of selection of selectable control 410(1), the communication platform may cause the first conversation thread 404 to be hidden from view. In such examples, the first conversation thread 404 may be represented by the first context identifier 406. In the illustrative example, the second context identifier 408 represents the second conversation thread, providing a summary associated therewith (e.g., the second conversation thread is associated with a product return, return confirmation identification RT123654R), to enable the user 412 to quickly ascertain the context of the second conversation thread without opening the second conversation thread and/or reading messages associated therewith. Responsive to receiving an indication of selection of the selectable control 410(2), the communication platform may cause the second conversation thread to be displayed on the messaging page 402.

In various examples, the first context identifier 406 and/or the second context identifier 408 may include a second selectable control 414 to enable the user 412 to continue the respective conversation thread. For purposes of this discussion, the second selectable control 414 will be discussed with regard to the first context identifier 406. However, it is contemplated that another second selectable control 414 associated with another context identifier and/or conversation thread, such as second context identifier 408 associated with the second conversation thread, may include the same or a similar functionality. Alternatively, in some examples, the conversation thread 404 may be continued without selecting the second selectable control 414 (e.g., messaging page 402 does not include the second selectable control 414 to indicate intent to continue the conversation). In such examples, the user 412 may scroll to a relevant conversation thread 404 and may compose a message with the relevant conversation thread 404 and/or associated context identifier 406 displayed on the messaging page. Based on a determination that the relevant conversation thread 404 and/or associated context identifier 406 are displayed, the messaging application may send an indication of intent to continue the conversation thread 404 to the communication platform. The communication platform may thus associate the additional message with the conversation thread 404, as described with regard to FIG. 4B.

Interface 400b shown in FIG. 4B illustrates a continuation 416 of the conversation thread 404 on the messaging page 402 associated with a messaging application. In various examples, the communication platform may receive an indication of user 412 selection of the second selectable control 414 associated with the first context identifier 406. In various examples, responsive to receipt of the indication of selection of the second selectable control 414, the communication platform may cause a label 418 to be displayed between the original conversation thread 404 and the continuation 416. In the illustrative example, the label 418 includes an indication of a "CONTINUED CONVERSATION." In other examples, the label 418 may include a date and/or time associated with the previous conversation and/or the continuation 416, or any other information that may be useful to delineate between the original conversation thread 404 and the continuation 416. In yet other examples, the message page 402 may not include a label 418. In such examples, the message page 402 may not include an indication of differentiation between the conversation thread 404 and the continuation 416.

In various examples, the communication platform may receive a first outgoing message 420 from the user 412 via the messaging application. In some examples, the user 412 may input the first outgoing message 420 via a message entry field 422 (e.g., illustrated with "ADD A COMMENT"). Responsive to receiving the first outgoing message 420 associated with the continuation 416, the communication platform may associate the first outgoing message 420 with the conversation thread 404. The communication platform may transmit data associated with the first outgoing message 420 to another party 424 with an association to the conversation thread 404. In some examples, the communication platform may cause the first outgoing message 420 to be displayed via an instance of the messaging application on a computing device associated with the other party 424 in a location associated with the conversation thread 404. In some examples, the display on the computing device associated with the other party 424 may be substantially similar to the messaging page 402 shown in FIG. 4B, such as with a label 418 indicating the continuation 416 to the conversation thread 404 (e.g., continued conversation).

In various examples, the communication platform may process messages associated with continuation 416, such as the first outgoing message 420 and a first incoming message 426 and may cause the messages to be displayed proximate the conversation thread 404. In various examples, the other party 424 may send an updated context message to update the first context identifier 406 associated with the conversation thread 404 and the continuation 416, such as that described above with regard to FIGS 3C and 3D.

In various examples, the updated context message may include an updated summary, such as a confirmation of the resolution, delivery time, or the like. For example, the user 412 may initiate the continuation 416 of the conversation in order to determine whether a refund is in process. Based on a confirmation of the refund processing, the other party 424 may include an updated summary including "Milk Refunded for July 1^{st} Delivery - Refund Confirmed; Confirmation Id: RE234234F."

In some examples, the updated context message may include first message and last message identifiers associated with one or more groups of messages (e.g., range islands of identifiers). For example, the conversation thread 404 may be associated with a start message identifier U001 and an end message identifier U004 (e.g., first start message identifier and first end message identifier, etc.), and the continuation 416 may be associated with a start message identifier U019 and an end message identifier U020 (e.g., second start message identifier and second end message identifier, etc.). In such an example, the updated context message may include rangeIslands: [{start "U001", end: "U004"}, {start "U019", end: "U020"}].

In various examples, the communication platform may cause one or more of the conversation thread 404 and/or the continuation 416 to be displayed in a similar font, text color, background color, or the like. In such examples, the user 412 may be able to quickly identify messages that are associated with a same thread. In some examples, the communication platform may cause the conversation thread 404 and the continuation 416 to be displayed in different fonts, text colors, background colors, or the like. In such examples, the user 412 may be able to quickly distinguish messages associated with a continuation 416 of a conversation thread 404 (e.g., second set of messages associated with a second time, etc.) from the first set of messages associated with the conversation thread 404 (e.g., first set of messages associated with a first time, etc.).

### Example Computing Architecture

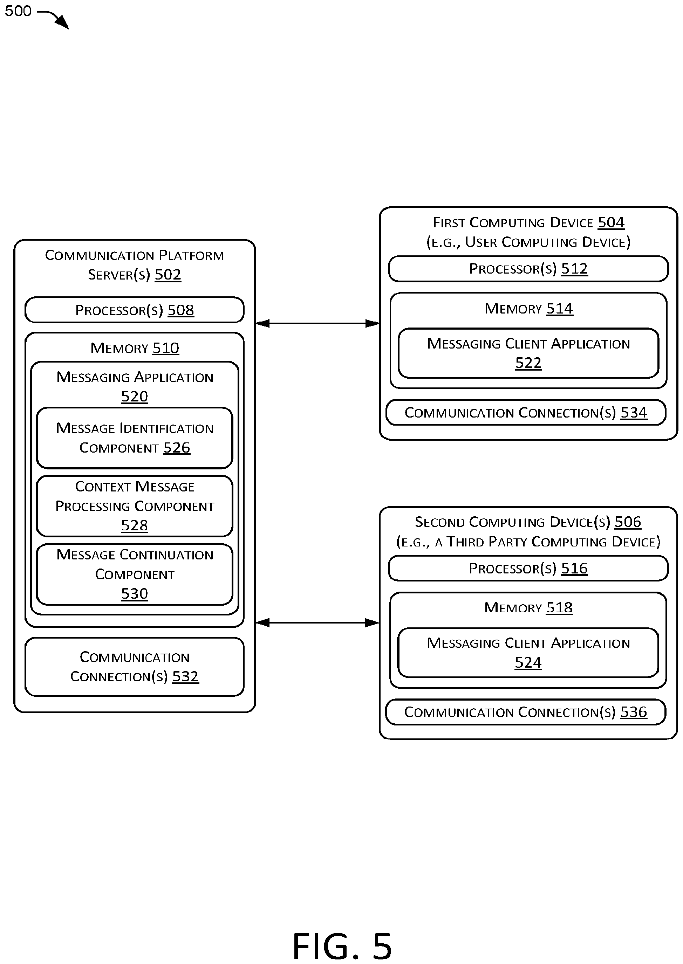

FIG. 5 illustrates a block diagram illustrating an example system 500 of computing devices usable to implement example techniques described herein. For example, FIG. 5 illustrates example computing devices including communication platform server(s) 502, one or more first computing devices 504, and one or more second computing devices 506, that interact over a network, such as network 114 in FIG. 1. By way of example and not limitation, the communication platform server(s) 502 may be representative of servers used to implement the communication platform system 100, the first computing device(s) 504 may be representative of the user computing device 106 associated with the user 108, and the second computing device(s) 506 may be representative of the third-party service provider computing device 110 associated with the third-party service provider 112.

The communication platform server(s) 502 may comprise one or more individual servers or other computing devices that may be physically located in a single central location or may be distributed at multiple different locations. The communication platform server(s) 502 may be hosted privately by an entity administering all or part of the communications network (e.g., a utility company, a governmental body, distributor, a retailer, manufacturer, etc.), or may be hosted in a cloud environment, or a combination of privately hosted and cloud hosted services.

Each of the computing devices described herein may include one or more processors and/or memory. Specifically, in the illustrated example, communication platform server(s) 502 include one or more processors 508 and memory 510, first computing device(s) 504 includes one or more processors 512 and memory 514, and second computing device(s) 506 includes one or more processors 516 and memory 518. By way of example and not limitation, the processor(s) may comprise one or more Central Processing Units (CPUs), Graphics Processing Units (GPUs), or any other device or portion of a device that processes electronic data to transform that electronic data into other electronic data that may be stored in registers and/or memory. In some examples, integrated circuits (e.g., ASICs, etc.), gate arrays (e.g., FPGAs, etc.), and other hardware devices may also be considered processors in so far as they are configured to implement encoded instructions.

The memory may comprise one or more non-transitory computer-readable media and may store an operating system and one or more software applications, instructions, programs, and/or data to implement the methods described herein and the functions attributed to the various systems. In various implementations, the memory may be implemented using any suitable memory technology, such as static random-access memory (SRAM), synchronous dynamic RAM (SDRAM), nonvolatile/Flash-type memory, or any other type of memory capable of storing information. The architectures, systems, and individual elements described herein may include many other logical, programmatic, and physical components, of which those shown in the accompanying figures are merely examples that are related to the discussion herein.

As shown in FIG. 5, communication platform server(s) 502 include a messaging application 520, first computing device(s) 504 includes messaging client application 522, and second computing device(s) 506 includes messaging client application 524 that enables interaction of content among the computing devices via the communication platform server(s) 502. For example, content (e.g., messages including text, images, audio, video, etc.) can be shared among users associated with messaging accounts of an online messaging network provided by the communication platform system and may include sharing content in accordance with an account of a user that is restricted. In some examples, the messaging client application enables interfaces to access content, to view content, and to generate content as those described with reference to FIGS. 2A-4B for example. In particular examples, communication platform server(s) 502 send instructions to present, transmit, and receive content as discussed with reference to FIG. 2A- FIG. 4B.

FIG. 5 further illustrates communication platform server(s) 502 as including message identification component 526, context message processing component 528, and message continuation component 530 to enable content such as messages, photos, and the like, to be shared among the computing devices. In various examples, the message identification component 526 may be configured to generate message identifiers for each message transmitted via the messaging application 520, such as from messaging client application 522 to messaging client application 524, or vice versa. The message identification component 526 may associate the message identifiers with the messages, such as in metadata associated therewith.

In various examples, the context message processing component 528 may be configured to receive a context message, such as via a messaging client application 524 associated with a second computing device(s) 506 (associated with a third-party service provider). The context message processing component 528 may process the context message and identify relevant data to present via messaging client application 522 (associated with the user) as a context identifier associated with a conversation thread, as described herein.

In some examples, the message continuation component 530 may be configured to receive an indication of selection of a selectable control to continue a conversation thread from a messaging client application 522 (associated with a user). The message continuation component 530 may associate additional messages communicated between relevant parties (e.g., user and third-party service provider) with the conversation thread, as described herein.

As shown in FIG. 5, communication platform server(s) 502 include communications connection(s) 532, first computing device(s) 504 include communications connection(s) 534, and second computing device(s) 506 include communications connection(s) 536 that enable communication between at least the communication platform server(s) 502 and one or more of the first computing device(s) 504, and the second computing device(s) 506.

The communication connection(s) 532, 534, and/or 536 can include physical and/or logical interfaces for connecting communication platform server(s) 502, first computing device(s) 504, and/or second computing device(s) 506 to another computing device or a network, such as network(s) 114. For example, the communications connection(s) 532, 534, and/or 536 can enable Wi-Fi-based communication such as via frequencies defined by the IEEE 802.11 standards, short range wireless frequencies such as Bluetooth®, cellular communication (e.g., 2G, 2G, 4G, 4G LTE, 5G, etc.) or any suitable wired or wireless communications protocol that enables the respective computing device to interface with the other computing device(s).

While FIG. 5 is provided as an example system 500 that can be used to implement techniques described herein, the techniques described and claimed are not limited to being performed by the system 500, nor is the system 500 limited to performing the techniques described herein.

### Example Methods

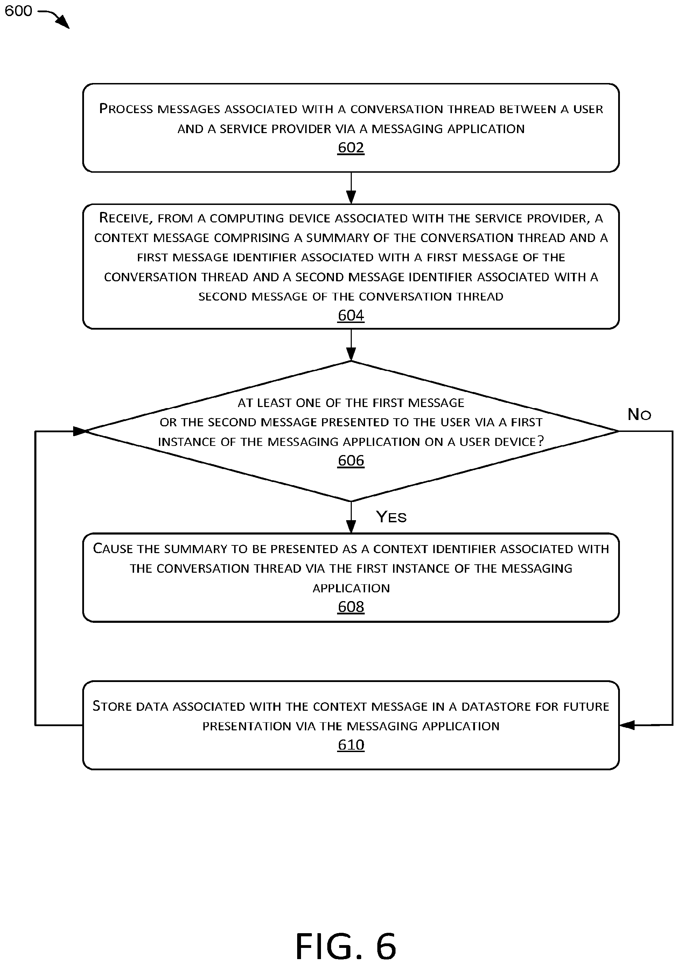

FIGS. 6-8 illustrate example processes in accordance with embodiments of the disclosure. These processes are illustrated as logical flow graphs, each operation of which represents a sequence of operations that may be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations may be combined in any order and/or in parallel to implement the processes.

FIG. 6 illustrates a flowchart illustrating example processes 600 usable to implement example techniques described herein. In some instances, some or all of process 600 may be performed by one or more components in the systems 100 or 500. By way of example and not limitation, the communication platform computing device referred to in process 600 may be representative of a computing device associated with the communication platform 104 or communication platform server(s) 502, the user device referred to in process 600 may be representative of the user computing device(s) 106 and/or first computing device(s) 504 and the service provider computing device referred to in process 600 may be representative of the third-party service provider computing device(s) 110 and/or the second computing device(s) 506. However, the process 600 is not limited to being performed by the system 100 or 500.

At operation 602, the process 600 may include processing messages associated with a conversation thread between a user and a service provider via a messaging application. The messages may be processed by a communication platform computing device. In various examples, the user may generate and send messages via a first instance of the messaging application, such as outgoing messages 206 of FIGS. 2A-2C and outgoing messages 304 of FIGS. 3A-3D. In some examples, the service provider (e.g., a customer service representative of a merchant, a computing system configured for providing customer service support, etc.) may generate and send messages via a second instance of the messaging application. In some examples, the communication platform computing device may process the messages by associating the messages transmitted between the user and the service provider in a conversation thread. A determination that the messages are associated with a conversation thread may be based on the messages being sent within a threshold time (e.g., 45 seconds, 3 minutes, 9 minutes, 2 hours, etc.) of one another.

In some examples, the processing may include transmitting the messages to the intended party (e.g., from the user to the service provider and vice versa). In some examples, the processing may include causing the messages to be presented via the first instance of the messaging application and/or the second instance of the messaging application in chronological order, such as based on a time in which each of the messages are sent.

In various examples, the processing may include assigning an outgoing message identifier, such as outgoing message identifier 214 and incoming identifier 216 of FIGS. 2A-2C, to each message transmitted between the user and the service provider. As discussed above, the identifiers may include numbers, letters, and/or symbols and may be based on the party who generated the message (e.g., user or service provider), a time in which the message is sent, an order of the message in the conversation thread, or the like.

In various examples, the processing may include transmitting a message identifier and/or other metadata (date, time, etc.) with a message to the intended recipient (e.g., user or service provider). In at least one example, the communication platform computing device may provide the message identifier associated with each message to the service provider. In some examples, a determination as to whether to include the message identifier and/or other metadata may be based on a user account associated with the intended recipient. For example, based on a determination that a user account associated with the service provider includes a business account (and/or customer service account), the communication platform computing device may determine to transmit the message identifier and/or the other metadata.

At operation 604, the process 600 may include receiving, from a service provider computing device, a context message comprising a summary of the conversation thread and a first message identifier associated with a first message of the conversation thread and a second message identifier associated with a second message of the conversation thread. The summary may include relevant information for the user to quickly assess a context associated with the conversation thread, such as without having to read the contents of the messages associated therewith. As non-limiting examples, the summary may include data such as an order identifier and/or date associated with an order (e.g., transaction) between the user and the service provider, a delivery update, a refund identifier, a return identifier, a topic associated with the conversation thread (e.g., item not delivered, item inoperable, refund requested, etc.), a resolution associated with the conversation thread (e.g., refund processed, missing item to be re-delivered, discount for delivery delay applied, coupon for future transaction delivered, etc.). In various examples, the communication platform computing device may store the context message in a datastore. In some examples, the communication platform computing device may push the context message to the first instance of the messaging application for storage on the user device. In such examples, the data associated with the context message may be accessed and/or viewed when the user device is in an offline mode. In at least one example, the data associated with the context message may comprise a context identifier including the summary of the conversation thread and message identifiers associated with a first message and a last message of the conversation thread.

At operation 606, the process 600 may include determining whether at least one of the first message or the second message are presented to the user via the first instance of the messaging application on a user device.

Based on a determination that the at least the first message or the second message are presented to the user via the first instance of the messaging application on the user device ("Yes" at operation 606), the process 600 may include, at operation 608, causing the summary to be presented as a context identifier associated with the conversation thread via the first instance of the messaging application, such as context identifier 218 of FIGS. 2B and 2C, 312 of FIGS. 3B and 3C, 314 of FIG. 3D, and 406 and/or 408 of FIGS. 4A. As discussed above, the context identifier may provide a summary of the conversation thread to enable the user to quickly ascertain the context associated with the conversation thread. The context identifier may be presented based on a determination that at least one message of the conversation thread is being presented on a display of the user device (via the first instance of the messaging application). In some examples, the context identifier may be anchored in place (e.g., stick) on a display proximate the conversation thread. In such examples, the user may scroll through the messages of the conversation thread, and the context identifier may remain in place on the display of the user interface.

Based on a determination that neither one of the first message or the second message are presented to the user via the first instance of the messaging application on the user device ("No" at operation 606), the process 600 may include, at operation 610, storing data associated with the context message in a datastore for future presentation via the messaging application. In some examples, the data associated with the context message may include the context identifier. In some examples, the data may include message identifiers associated with each of the messages of the conversation thread. In at least one example, the data may include message identifiers associated with a first message of the conversation thread and a last message of the conversation thread.

In various examples, the communication platform computing device may return to operation 606 to determine whether at least one of the first message or the second message are being presented to the user via the first instance of the messaging application. Accordingly, the communication platform may be configured to cause the first instance of the messaging application to present the context identifier on the display associated with the user device at any time at least one message of the conversation thread is presented on the display.

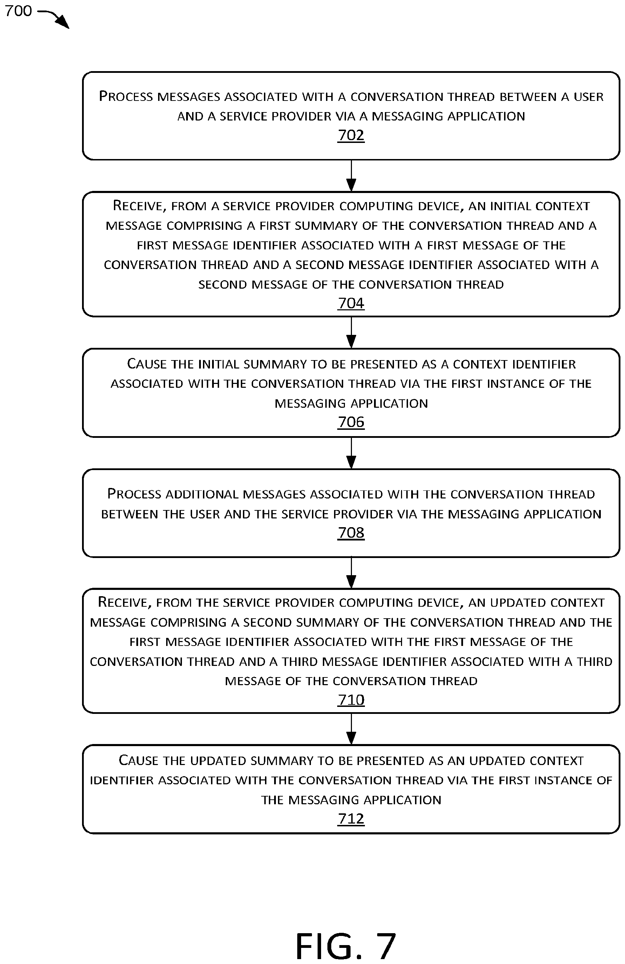

FIG. 7 illustrates an example process for updating a message header associated with a conversation thread, utilizing the techniques described herein. In some instances, some or all of process 700 may be performed by one or more components in the systems 100 or 500. By way of example and not limitation, the communication platform computing device referred to in process 700 may be representative of a computing device associated with the communication platform 104 or communication platform server(s) 502, the user device referred to in process 700 may be representative of the user computing device(s) 106 and/or first computing device(s) 504 and the service provider computing device referred to in process 700 may be representative of the third-party service provider computing device(s) 110 and/or the second computing device(s) 506. However, the process 700 is not limited to being performed by the system 100 or 500.

At operation 702, the process 700 may include processing messages associated with a conversation thread between a user and a service provider via a messaging application. The messages may be processed by a communication platform computing device. In various examples, the user may generate and send messages via a first instance of the messaging application, such as outgoing messages 206, and 304 of FIGS. 2A-2C and 3A-3D. In some examples, the service provider (e.g., a customer service representative of a merchant, a computing system configured for providing customer service support, etc.) may generate and send messages via a second instance of the messaging application. In some examples, the communication platform computing device may process the messages by associating the messages transmitted between the user and the service provider in a conversation thread. A determination that the messages are associated with a conversation thread may be based on the messages being sent within a threshold time (e.g., 45 seconds, 3 minutes, 9 minutes, 2 hours, etc.) of one another.

In some examples, the processing may include transmitting the messages to the intended party (e.g., from the user to the service provider and vice versa). In some examples, the processing may include causing the messages to be presented via the first instance of the messaging application and/or the second instance of the messaging application in chronological order, such as based on a time in which each of the messages are sent.

In various examples, the processing may include assigning an outgoing message identifier, such as outgoing message identifier 214 and incoming message identifier 216 of FIGS. 2A-2C, to each message transmitted between the user and the service provider. As discussed above, the identifiers may include numbers, letters, and/or symbols and may be based on the party who generated the message (e.g., user or service provider), a time in which the message is sent, an order of the message in the conversation thread, or the like.

In various examples, the processing may include transmitting a message identifier and/or other metadata (date, time, etc.) with a message to the intended recipient (e.g., user or service provider). In at least one example, the communication platform computing device may provide the message identifier associated with each message to the service provider. In some examples, a determination as to whether to include the message identifier and/or other metadata may be based on a user account associated with the intended recipient. For example, based on a determination that a user account associated with the service provider includes a business account (and/or customer service account), the communication platform computing device may determine to transmit the message identifier and/or the other metadata.

At operation 704, the process 700 may include receiving, from a service provider computing device, an initial context message comprising an initial summary of the conversation thread and a first message identifier associated with a first message of the conversation thread and a second message identifier associated with a second message of the conversation thread. The initial summary may include a brief statement of the main point (e.g., overall topic) associated with the conversation thread. The initial summary may include data such as an order identifier and/or date associated with an order (e.g., transaction) between the user and the other party, a general topic associated with the conversation thread (e.g., inquiry about delivery, etc.).

At operation 706, the process 700 may include causing the initial summary to be presented as an initial context identifier associated with the conversation thread via the first instance of the messaging application, such as context identifier 312 of FIGS. 3B and 3C. As discussed above, the initial context identifier may provide a context of the conversation thread to enable the user to quickly ascertain the context associated with the conversation thread. The initial context identifier may be presented based on a determination that at least one message of the conversation thread is being presented on a display of the user device (via the first instance of the messaging application).

At operation 708, the process 700 may include processing additional messages associated with the conversation thread between the user and the service provider via the messaging application. The communication platform computing device may assign each of the additional messages message identifiers and transmit the additional messages to the intended recipient.

At operation 710, the process 700 may include receiving, from the service provider computing device, an updated context message comprising an updated summary of the conversation thread and a first message identifier associated with a first message of the conversation thread and a third message identifier associated with a third message of the conversation thread. The third message may represent a last (e.g., final) message sent in the conversation thread. The updated summary may include relevant information for the user to quickly assess a context associated with the conversation thread, such as without having to read the contents of the messages associated therewith. As non-limiting examples, the summary may include data such as an order identifier and/or date associated with an order (e.g., transaction) between the user and the service provider, a delivery update, a refund identifier, a return identifier, a topic associated with the conversation thread (e.g., item not delivered, item inoperable, refund requested, etc.), a resolution associated with the conversation thread (e.g., refund processed, missing item to be re-delivered, discount for delivery delay applied, coupon for future transaction delivered, etc.). In various examples, the communication platform computing device may store the updated context message in a datastore. In some examples, the communication platform computing device may push the updated context message to the first instance of the messaging application for storage on the user device. In such examples, the data associated with the updated context message may be accessed and/or viewed when the user device is in an offline mode. In at least one example, the data associated with the updated context message may comprise an updated context identifier including the summary of the conversation thread and message identifiers associated with the first message and the last message of the conversation thread.

At operation 712, the process 700 may include causing the updated summary to be presented as an updated context identifier associated with the conversation thread via the first instance of the messaging application, such as context identifiers 218 of FIGS. 2B and 2C, 314 of FIG. 3D, and 406 and/or 408 of FIGS. 4A. As discussed above, the initial context identifier may provide a context of the conversation thread to enable the user to quickly ascertain the context associated with the conversation thread. The initial context identifier may be presented based on a determination that at least one message of the conversation thread is being presented on a display of the user device (via the first instance of the messaging application).

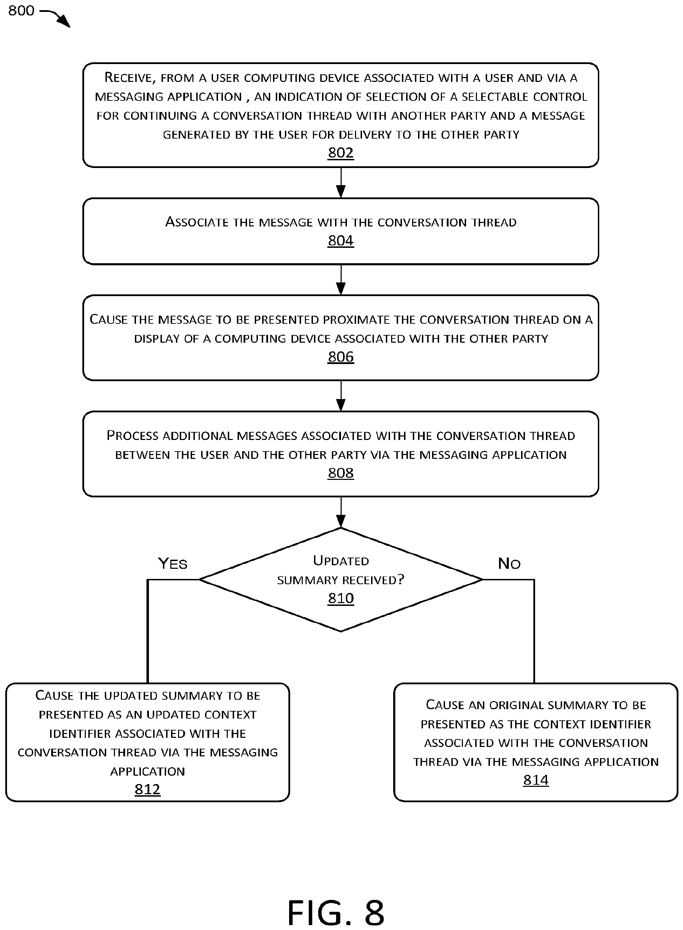

FIG. 8 illustrates an example process for associating a message generated by a user with a previous conversation thread. In some instances, some or all of process 800 may be performed by one or more components in the systems 100 or 500. By way of example and not limitation, the communication platform computing device referred to in process 800 may be representative of a computing device associated with the communication platform 104 or communication platform server(s) 502, the user device referred to in process 800 may be representative of the user computing device(s) 106 and/or first computing device(s) 504 and the service provider computing device referred to in process 800 may be representative of the third-party service provider computing device(s) 110 and/or the second computing device(s) 506. However, the process 800 is not limited to being performed by the system 100 or 500.

At operation 802, the process 800 may include receiving, from a user computing device associated with a user and via a messaging application, an indication of selection of a selectable control for continuing a conversation thread with another party and a message generated by the user for delivery to the other party. In some examples, the selectable control may be associated with a context identifier corresponding to the conversation thread. In some examples, the selectable control may be associated with the conversation thread. In such examples, the selectable control may be located on a display of the user device proximate a last message in the conversation thread.

At operation 804, the process 800 may include associating the message with the conversation thread. In various examples, the association may include determining a message identifier for the message that corresponds with other message identifiers associated with other messages in the conversation thread. In some examples, the association may include storing the message in a datastore with the other messages in the conversation thread.

At operation 806, the process 800 may include causing the message to be presented proximate the conversation thread on a first display of a computing device associated with the other party and a second display of the user computing device. In various examples, the communication platform computing device may cause a label to be displayed on the first display and/or the second display, such as label 418 of FIG. 4B. The label may include an indication of the continued conversation thread, a date and/or time associated with the previous messages (e.g., last message), a date and/or time associated with the continued conversation, or any other information that may indicate to the users the distinction between the original conversation thread and new messages associated therewith.

At operation 808, the process 800 may include processing additional messages associated with the conversation thread between the user and the other party via the messaging application. The communication platform computing device may assign each of the additional messages message identifiers and transmit the additional messages to the intended recipient.

At operation 810, the process 800 may include determining whether an updated context message is received from the other party.

Based on a determination that the updated context message is received from the other party ("Yes" at operation 810), the process 800 may include, at operation 812, causing an updated summary to be presented as an updated context identifier associated with the conversation thread on the display of the user computing device and/or the display of the other party computing device. In various examples, the updated context identifier may include an updated resolution and/or other information to enable the user and/or other party to quickly ascertain the context of the conversation thread including the original messages and the additional messages.

In various examples, the communication platform computing device may store the updated summary in a datastore. In some examples, the communication platform computing device may push the updated summary to a first instance of the messaging application for storage on the user device. In such examples, the data associated with the updated summary may be accessed and/or viewed when the user device is in an offline mode.

Based on a determination that the updated context message is not received from the other party ("No" at operation 810), the process 800 may include, at operation 814, causing an original summary to be presented as a context identifier associated with the conversation thread. The original summary may include data corresponding to a resolution associated with the conversation thread at the first time (e.g., prior to the additional messages being sent). In some examples, the summary may include an order identifier and/or date associated with an order (e.g., transaction) between the user and the service provider, a delivery update, a refund identifier, a return identifier, a topic associated with the conversation thread (e.g., item not delivered, item inoperable, refund requested, etc.), or the like.

As stated above, the order in which the operations are described is not intended to be construed as a limitation, and any number of the described operations may be combined in any order and/or in parallel to implement the processes. In some embodiments, one or more operations of the above-described methods may be omitted entirely. By way of example and not limitation, operations 602 may be performed without operations 604-610 and/or operations 702-706 may be performed without operations 708-712. Moreover, the methods described herein can be combined in whole or in part with each other or with other methods.

The various techniques described herein may be implemented in the context of computer-executable instructions or software, such as program modules, that are stored in computer-readable storage and executed by the processor(s) of one or more computing devices such as those illustrated in the figures. Generally, program modules include routines, programs, objects, components, data structures, etc., and define operating logic for performing particular tasks or implement particular abstract data types.

Other architectures may be used to implement the described functionality and are intended to be within the scope of this disclosure. Furthermore, although specific distributions of responsibilities are defined above for purposes of discussion, the various functions and responsibilities might be distributed and divided in different ways, depending on circumstances.

Similarly, software may be stored and distributed in various ways and using different means, and the particular software storage and execution configurations described above may be varied in many different ways. Thus, software implementing the techniques described above may be distributed on various types of computer-readable media, not limited to the forms of memory that are specifically described.

### Conclusion

Although the discussion above sets forth example implementations of the described techniques, other architectures may be used to implement the described functionality, and are intended to be within the scope of this disclosure. Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method comprising:
processing messages associated with a conversation thread between a user and a service provider, wherein the messages are transmitted between a first instance of an application on a first device associated with the user and a second instance of the application on a second device associated with the service provider;
receiving, from the second device via the second instance of the application and at a first time, a summary of the conversation thread and an indication of a first message and a second message of the messages associated with the conversation thread; and
causing the summary to be presented at the first device via the first instance of the application based at least in part on an indication that at least one of the first message or the second message is presented on a display of the first device via the first instance of the application.

2. The method of claim 1, wherein processing the messages comprises:
associating a first message identifier with the first message and a second message identifier with the second message; and
providing the first message identifier and the second message identifier at the second device via the second instance of the application,
wherein the indication of the first message and the second message comprises the first message identifier and the second message identifier.

3. The method of claim 1 or 2, the method further comprising:
receiving, from the second device via the second instance of the application at a second time, an update to the summary and a second indication of the first message and a third message of the conversation thread, wherein the third message comprises a last message of the conversation thread; and
causing the update to the summary to be presented at the first device via the first instance of the application based at least in part on an indication that at least one of the first message or the third message are presented on the display of the first device via the first instance of the application.

4. The method of any one of the preceding claims, wherein the messages are presented sequentially from a top toward a bottom of a user interface of the first instance of the application, and the summary is presented in a position proximate the top of the user interface before the messages associated with the conversation thread.

5. The method of any one of the preceding claims, further comprising:
receiving, from the first device via the first instance of the application, an indication of selection of a selectable control to collapse the conversation thread; and
causing the conversation thread to be hidden from view, wherein the conversation thread is represented on the display of the first device by the summary presented on the display.

6. The method of any one of the preceding claims, the method further comprising:
receiving, from the first device via the first instance of the application, a first indication of selection of a selectable control to continue the conversation thread at a second time and a third message associated with the conversation thread; and
causing the third message to be presented at the second device via the second instance of the application proximate the conversation thread; and preferably the method further comprises:
processing additional messages associated with the conversation thread between the first instance of the application and the second instance of the application;
receiving, from the second device via the second instance of the application, an update to the summary and an indication of the first message and a fourth message of the conversation thread, wherein the fourth message comprises an updated last message of the conversation thread; and
causing the update to the summary to be presented at the first device via the first instance of the application based at least in part on an indication that at least one of the first message or the fourth message are presented on the display of the first device via the first instance of the application.

7. A computing system comprising:
one or more processors; and
computer readable media storing instructions that, when executed by the one or more processors, cause the computing system to:
process messages associated with a conversation thread between a user and a service provider, wherein the messages are transmitted between a first instance of an application on a first device associated with the user and a second instance of the application on a second device associated with the service provider;
receive, from the second device via the second instance of the application, a summary of the conversation thread; and
cause the summary to be presented at the first device via the first instance of the application based at least in part on an indication that at least one message of the messages is presented on a display of the first device via the first instance of the application.

8. The computing system of claim 7, the instructions further causing the system to receive, from the second device via the second instance of the application, an indication of a first message of the conversation thread and a second message of the conversation thread,
wherein the second message is associated with a last message of the conversation thread, and
wherein the summary is presented via the first instance of the application concurrently with the messages associated with the conversation thread between the first message and the second message.

9. The method of any one of claims 1 to 6 or the computing system of claims 7 or 8, wherein the summary comprises a context of the conversation thread, the context comprising at least one of:
an order identifier;
a delivery update;
a refund identifier;
a topic associated with the conversation thread;
a return identifier; or
a resolution associated with the conversation thread.

10. The computing system of any one of claims 7 to 9, wherein the summary is received at a first time, the instructions further causing the system to:
receive, from the second device via the second instance of the application at a second time, an update to the summary and an indication of a first message and a second message associated with the conversation thread, the second message comprising a last message associated with the conversation thread; and
cause the update to the summary to be presented at the first device via the first instance of the application based at least in part on an indication that at least one of the first message or the second message are presented on the display of the first device via the first instance of the application.

11. The computing system of any one of claims 7 to 10, wherein the conversation thread is associated with a first time, the instructions further causing the system to:
receive, from the first device via the first instance of the application, a first indication of selection of a selectable control to continue the conversation thread at a second time and an additional message associated with the conversation thread; and
cause the additional message to be presented at the second device via the second instance of the application proximate a message associated with conversation thread; and preferably the instructions further cause the system to:
process additional messages associated with the conversation thread between the first instance of the application and the second instance of the application;
receive, from the second device via the second instance of the application, an update to the summary and an indication of a first message and a second message associated with the conversation thread, the second message comprising a last message of the conversation thread comprising the messages and the additional messages; and
cause the update to the summary to be presented at the first device via the first instance of the application based at least in part on an indication that at least one of the first message or the second message are presented on the display of the first device via the first instance of the application.

12. One or more computer readable media storing instructions that, when executed by one or more processors of a computing device, cause the computing device to:
process messages associated with a conversation thread between a user and a service provider, wherein the messages are transmitted between a first instance of an application on a first device associated with the user and a second instance of the application on a second device associated with the service provider;
receive, from the second device via the second instance of the application, a summary of the conversation thread; and
cause the summary to be presented at the first device via the first instance of the application based at least in part on an indication that at least one message of the messages is presented on a display of the first device via the first instance of the application.

13. The one or more computer readable media of claim 12, the instructions further causing the computing device to receive, from the second device via the second instance of the application, an indication of association of the summary with a first message of the conversation thread and a second message of the conversation thread,
wherein the second message is associated with a last message of the conversation thread, and
wherein the summary is presented via the first instance of the application concurrently with the messages of the conversation thread between the first message and the second message; and preferably the instructions further cause the computing device to:
associate a first message identifier with the first message and a second message identifier with the second message; and
send the first message identifier and the second message identifier to the second device via the second instance of the application,
wherein the indication of association of the summary with the first message and the second message comprises the first message identifier and the second message identifier; and preferably wherein the summary is associated with a first time, the instructions further causing the computing device to:
receive, from the second device via the second instance of the application at a second time, an update to the summary and a second indication of the first message and a third message of the conversation thread, wherein the third message comprises an updated last message of the conversation thread; and
cause the update to the summary to be presented at the first device via the first instance of the application based at least in part on an indication that at least one of the first message or the third message are presented on the display of the first device via the first instance of the application.

14. The one or more computer readable media of claim 12 or 13, wherein the conversation thread is associated with a first time, the instructions further causing the computing device to:
receive, from the first device via the first instance of the application, a first indication of selection of a selectable control to continue the conversation thread at a second time and an additional message associated with the conversation thread; and
cause the additional message to be presented at the second device via the second instance of the application proximate a message associated with conversation thread.

15. The one or more computer readable media of any one of claims 12 to 14, the instructions further causing the computing device to:
process additional messages associated with the conversation thread between the first instance of the application and the second instance of the application;
receive, from the second device via the second instance of the application, an update to the summary and an indication of a first message and a second message associated with the conversation thread, the second message comprising a last message of the conversation thread comprising the messages and the additional messages; and
cause the update to the summary to be presented at the first device via the first instance of the application based at least in part on an indication that at least one of the first message or the second message are presented on the display of the first device via the first instance of the application.
